(19) Europäisches Patentamt / European Patent Office / Office européen des brevets

(11) **EP 4 220 931 A1**

(12) **EUROPEAN PATENT APPLICATION**
published in accordance with Art. 153(4) EPC

(43) Date of publication:
**02.08.2023 Bulletin 2023/31**

(21) Application number: **20955267.8**

(22) Date of filing: **28.09.2020**

(51) International Patent Classification (IPC):
**H02M 7/483** (2007.01)

(52) Cooperative Patent Classification (CPC):
**H02M 7/483**

(86) International application number:
**PCT/JP2020/036540**

(87) International publication number:
**WO 2022/064673 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **KOJIMA, Tetsuya**
**Tokyo 100-8310 (JP)**

(74) Representative: **Meissner Bolte Partnerschaft mbB**
**Patentanwälte Rechtsanwälte**
**Postfach 86 06 24**
**81633 München (DE)**

(54) **POWER CONVERSION DEVICE**

(57) A power converter (1) includes an inverter circuit (4) connected to positive and negative terminals of a direct current power supply (3), three H-bridge circuits (5, 6, 7), and a power conversion controller (9A). The power conversion controller (9A) calculates a first three-phase common voltage common to three phases; generates second phase voltage commands obtained by superimposing the calculated first three-phase common voltage on first phase voltage commands; further calculates a second three-phase common voltage common to three phases; generates third phase voltage commands obtained by superimposing the calculated second three-phase common voltage on the second phase voltage commands; and generates gate signals to be applied to first legs based on positive/negative polarity of the third phase voltage commands and concurrently generates gate signals to be applied to second legs according to the third phase voltage commands. During a period in which a three-phase sum of the three-phase pulse voltage commands is not zero, the power conversion controller (9A) calculates the second three-phase common voltage so that the positive/negative polarity of the third phase voltage commands is not switched.

FIG.1

**Description**

Field

The present disclosure relates to a power converter that converts direct current power into alternating current power to a load and supplies the alternating current power to the load while reducing noise and harmonics.

Background

In Patent Literature 1 listed below, there is disclosed an example of a power converter that converts direct current power into alternating current power to a load and supplies the alternating current power to the load while reducing or making lower noise and harmonics. The power converter described in Patent Literature 1 is a device of a system called a cascaded multilevel inverter in which an H-bridge circuit is connected in series to each phase of a three-phase three-level inverter. The H-bridge circuit includes two legs each having two semiconductor switching elements connected in series to each other. According to the power converter of this system, noise and harmonics of an output voltage can be reduced as compared with the case of only use of the three-phase three-level inverter thereof.

Citation List

Patent Literature

Patent Literature 1: International Publication No. WO 2010/103600

Summary

Technical Problem

However, in the case of the cascaded multilevel inverter, a larger number of semiconductor switching elements are required as compared with the case of the only use of the three-phase three-level inverter. Therefore, there is a problem that the switching loss increases and the efficiency of the power converter decreases as compared with the case of the only use of the three-phase three-level inverter.
The present disclosure has been made in view of the above circumstances, and an object thereof is to provide a power converter capable of efficient control of the power converter while reducing noise and harmonics.

Solution to Problem

In order to solve the above-mentioned problem and achieve the object, the present disclosure provides a power converter that converts direct current power outputted from a direct current power supply into alternating current power to a load, and supplies the alternating current power to the load, the power converter comprising: a three-phase inverter circuit connected to positive and negative terminals of the direct current power supply; three single-phase bridge circuits each including: a first leg in which two semiconductor switching elements are connected in series, and a midpoint that is a connecting end of the two semiconductor switching elements is connected to an alternating current end of a corresponding phase among different alternating current ends of the three-phase inverter circuit; a second leg connected in parallel to the first leg, in which two semiconductor switching elements are connected in series, and a midpoint that is a connecting end of the two semiconductor switching elements is connected to a terminal of a corresponding phase among different terminals of the load; and a capacitor connected to both ends of each of the first and second legs; and a controller to generate first gate signals for controlling an operation of the three-phase inverter circuit on the basis of sinusoidal phase voltage commands and second gate signals for controlling operations of the first and second legs in the three single-phase bridge circuits, wherein the controller divides the sinusoidal phase voltage commands into three-phase pulse voltage commands to be issued to the three-phase inverter circuit and first phase voltage commands that are voltage commands to be issued to the three single-phase bridge circuits, respectively; generates the first gate signals on the basis of the three-phase pulse voltage commands; calculates a first three-phase common voltage common to three phases, and generates second phase voltage commands obtained by superimposing the first three-phase common voltage calculated on the first phase voltage commands; further calculates a second three-phase common voltage common to the three phases, and generates third phase voltage commands obtained by superimposing the second three-phase common voltage calculated on the second phase voltage commands; generates the second gate signals to be applied to one of the first and second legs on the basis of positive/negative polarity of the third phase voltage commands, and concurrently generates the second gate signals to be applied to another one of the first and second legs in accordance with the third phase voltage commands; and calculates the second three-phase common voltage so that the positive/negative polarity of the third phase voltage commands is not switched during a period in which a three-phase sum of the three-phase pulse voltage commands is not zero.

Advantageous Effects of Invention

The power converter according to the present disclosure has an advantageous effect of being able to achieve efficient control of the power converter while reducing possible noise and harmonics.

Brief Description of Drawings

FIG. 1 is a circuit diagram illustrating a configuration of a power converter according to a first embodiment.
FIG. 2 is a block diagram illustrating a configuration of a power conversion controller in the first embodiment.
FIG. 3 is a graph illustrating an example of a waveform for one phase of three-phase pulse voltage commands generated by a three-phase pulse voltage command calculator of FIG. 2.
FIG. 4 is a flowchart used to describe an operation of a first common voltage superimposer in the first embodiment.
FIG. 5 is a flowchart used to describe an operation of a second common voltage superimposer in the first embodiment.
FIG. 6 is a first chart used to describe operations of a voltage polarity controller and a PWM controller in the first embodiment.
FIG. 7 is a second chart used to describe operations of the voltage polarity controller and the PWM controller in the first embodiment.
FIG. 8 is a chart illustrating a dead time insertion method in a dead time inserter of the first embodiment.
FIG. 9 is a diagram illustrating operation waveforms in the case of absence of both the first common voltage superimposer and the second common voltage superimposer in the configuration of the first embodiment (modulation factor m=0.70).
FIG. 10 is a diagram illustrating operation waveforms in the case of absence of the second common voltage superimposer in the configuration of the first embodiment (modulation factor m=0.70).
FIG. 11 is a diagram illustrating operation waveforms of the configuration of FIG. 2 in the first embodiment (modulation factor m=0.70).
FIG. 12 is a diagram illustrating operation waveforms in the case of absence of both the first common voltage superimposer and the second common voltage superimposer in the configuration of the first embodiment (modulation factor m=0.95).
FIG. 13 is a diagram illustrating operation waveforms in the case of absence of the second common voltage superimposer in the configuration of the first embodiment (modulation factor m=0.95).
FIG. 14 is a diagram illustrating operation waveforms of the configuration of FIG. 2 in the first embodiment (modulation factor m=0.95).
FIG. 15 is a diagram illustrating operation waveforms in the case of absence of both the first common voltage superimposer and the second common voltage superimposer in the configuration of the first embodiment (modulation factor m=1.23).
FIG. 16 is a diagram illustrating operation waveforms in the case of absence of the second common voltage superimposer in the configuration of the first embodiment (modulation factor m=1.23).
FIG. 17 is a diagram illustrating operation waveforms of the configuration of FIG. 2 in the first embodiment (modulation factor m=1.23).
FIG. 18 is a diagram illustrating operation waveforms in the case of absence of both the first common voltage superimposer and the second common voltage superimposer in the configuration of the first embodiment (modulation factor m=1.15).
FIG. 19 is a circuit diagram illustrating a configuration of a power converter according to a second embodiment.
FIG. 20 is a block diagram illustrating a configuration of a power conversion controller in the second embodiment.
FIG. 21 is a flowchart used to describe an operation of a second common voltage superimposer in the second embodiment.
FIG. 22 is a diagram illustrating operation waveforms of the configuration of FIG. 20 in the second embodiment (modulation factor m=0.95).
FIG. 23 is a circuit diagram illustrating a configuration of a power converter according to a third embodiment.
FIG. 24 is a block diagram illustrating a configuration of a power conversion controller in the third embodiment.
FIG. 25 is a flowchart used to describe an operation of a first common voltage superimposer in the third embodiment.
FIG. 26 is a flowchart used to describe an operation of a second common voltage superimposer in the third embodiment.

FIG. 27 is a diagram illustrating operation waveforms in the case of absence of both the first common voltage superimposer and the second common voltage superimposer in the configuration of the third embodiment (modulation factor m=0.85).

FIG. 28 is a diagram illustrating operation waveforms in the case of absence of the second common voltage superimposer in the configuration of the third embodiment (modulation factor m=0.85).

FIG. 29 is a diagram illustrating operation waveforms of the configuration of FIG. 24 in the third embodiment (modulation factor m=0.85).

FIG. 30 is a diagram illustrating operation waveforms in the case of absence of both the first common voltage superimposer and the second common voltage superimposer in the configuration of the third embodiment (modulation factor m=1.15).

FIG. 31 is a diagram illustrating operation waveforms in the case of absence of the second common voltage superimposer in the configuration of the third embodiment (modulation factor m=1.15).

FIG. 32 is a diagram illustrating operation waveforms of the configuration of FIG. 24 in the third embodiment (modulation factor m=1.15).

FIG. 33 is a circuit diagram illustrating a configuration of a power converter according to a fourth embodiment.

FIG. 34 is a block diagram illustrating a configuration of a power conversion controller in the fourth embodiment.

FIG. 35 is a flowchart used to describe an operation of a second common voltage superimposer in the fourth embodiment.

FIG. 36 is a diagram illustrating, as a target for comparison, the operation waveforms of the configuration of FIG. 24 in the third embodiment.

FIG. 37 is a diagram illustrating operation waveforms of the configuration of FIG. 34 in the fourth embodiment.

FIG. 38 is a graph illustrating a relationship between the number of switching operations of a first leg and the modulation factor in a case where the second common voltage superimposer is not used in the first and second embodiments.

FIG. 39 is a graph illustrating a relationship between the number of switching operations and the modulation factor in a case where a second three-phase common voltage superimposer in the first embodiment is used.

FIG. 40 is a graph illustrating a relationship between the number of switching operations and the modulation factor in a case where a second three-phase common voltage superimposer in the second embodiment is used.

FIG. 41 is a graph illustrating a relationship between the number of switching operations of the first leg and the modulation factor in a case where the first common voltage superimposer in the third and fourth embodiments is used and the second common voltage superimposer is not used.

FIG. 42 is a graph illustrating a relationship between the number of switching operations and the modulation factor in a case where a second three-phase common voltage superimposer in the third embodiment is used.

FIG. 43 is a graph illustrating a relationship between the number of switching operations and the modulation factor in a case where a second three-phase common voltage superimposer in the fourth embodiment is used.

FIG. 44 is a diagram illustrating an example of a hardware configuration that implements functions of the power conversion controller according to the first to fourth embodiments.

FIG. 45 is a diagram illustrating another example of a hardware configuration that implements functions of the power conversion controller according to the first to fourth embodiments.

Description of Embodiments

Hereinafter, a power converter according to embodiments of the present disclosure will be described in detail with reference to the accompanying drawings.

First Embodiment.

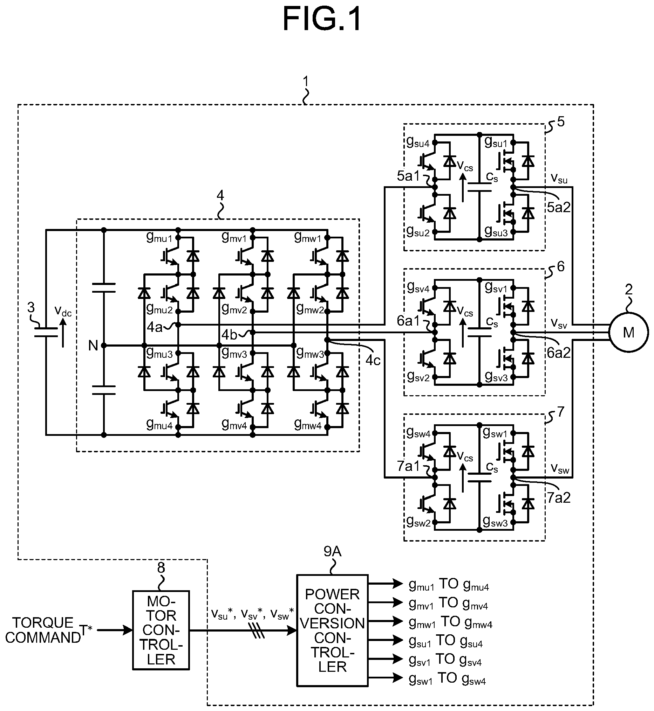

FIG. 1 is a circuit diagram illustrating a configuration of a power converter 1 according to a first embodiment. The power converter 1 according to the first embodiment is a power converting device that is configured to convert direct current electric power outputted from a direct current power supply 3 into alternating current electric power to a motor 2 that is a load, and supplies the alternating current power to the motor 2. As illustrated in FIG. 1, the power converter 1 includes an inverter circuit 4, H-bridge circuits 5, 6, and 7 that are single-phase bridge circuits, and a power conversion controller 9A as a controller. The inverter circuit 4 is connected between positive and negative terminals of the direct current power supply 3, and the H-bridge circuits 5, 6, and 7 are inserted and connected in series between alternating current ends 4a, 4b, and 4c each corresponding to a different phase of the inverter circuit 4 and corresponding phases of the motor 2, respectively. Although FIG. 1 illustrates, by way of example, a case where the inverter circuit 4 is a three-phase three-level inverter, the present disclosure is not limited thereto. The inverter circuit 4 may be a three-phase two-level inverter. Alternatively, the inverter circuit 4 may be a two-level inverter or a three-level inverter having multiple phases, that is, four or more phases.

The H-bridge circuits 5, 6, and 7 each include a first leg in which two semiconductor switching elements having a reverse conducting function are connected to each other in series, and a corresponding midpoint 5a1, 6a1, or 7a1 that is a connecting end of the two semiconductor switching elements is connected to a corresponding one of the alternating current ends 4a, 4b, and 4c of the three-phase inverter circuit, that is, an alternating current end for a corresponding phase among the different alternating current ends. Moreover, the H-bridge circuits 5, 6, and 7 each include a second leg in which two semiconductor switching elements having a reverse conducting function are connected to each other in series, and a corresponding midpoint 5a2, 6a2, or 7a2 that is a connecting end of the two semiconductor switching elements is connected to a terminal for a corresponding phase of the motor 2, that is, a terminal for a corresponding phase among different terminals of the motor 2. Furthermore, the H-bridge circuits 5, 6, and 7 each include a capacitor Cs connected to both ends of each of the first and second legs.

FIG. 1 illustrates, as the semiconductor switching element having the reverse conducting function, an element including an insulated gate bipolar transistor (IGBT) and an antiparallel diode, or an element including a metal-oxide-semiconductor field-effect transistor (MOSFET) and an antiparallel diode. A reverse-conducting (RC) IGBT may be used instead of the IGBT or the MOSFET. Note that in a case where the MOSFET or the RC-IGBT is used for the semiconductor switching element in the configuration of FIG. 1, the antiparallel diode may be omitted therefrom.

Also, in a typical configuration, an IGBT made of silicon (Si), which is a narrow bandgap semiconductor element, is used for each semiconductor switching element of the inverter circuit 4. An IGBT made of Si is also used for each semiconductor switching element of the first leg in each of the H-bridge circuits 5, 6, and 7, that is, the leg whose midpoint is connected to the inverter circuit 4. On the other hand, a MOSFET made of, for example, silicon carbide (SiC), which is a wide band gap semiconductor element, is used for each semiconductor switching element of the second leg in each of the H-bridge circuits 5, 6, and 7, that is, the leg whose midpoint is connected to the motor 2. While SiC has a feature of being able to form a semiconductor element having smaller on-voltage and switching loss as compared with Si, SiC has another feature in which an element made of SiC is difficult to obtain and more expensive as compared with an element made of Si. For this reason, using the IGBT made of Si for the first leg and using the MOSFET made of SiC for the second leg can achieve the problems on both the manufacturing cost and the difficulty of obtaining the element. Note that considering the symmetry of the H-bridge circuits 5, 6, and 7, functionally, there is no problem even when usage relation is changed between the first leg and the second leg. Thus, it is also possible to use the MOSFET made of SiC for the first leg and the IGBT made of Si for the second leg.

A torque command T* is inputted to a motor controller 8. The motor controller 8 calculates sinusoidal phase voltage commands $v_{su}{}^*$, $v_{sv}{}^*$, and $v_{sw}{}^*$ such that the motor 2 generates a desired torque based on the torque command T*, and outputs the sinusoidal phase voltage commands $v_{su}{}^*$, $v_{sv}{}^*$, and $v_{sw}{}^*$ to the power conversion controller 9A. The power conversion controller 9A generates gate signals $g_{mu1}$ to $g_{mu4}$, $g_{mv1}$ to $g_{mv4}$, and $g_{mw1}$ to $g_{mw4}$ as first gate signals, and gate signals $g_{su1}$ to $g_{su4}$, $g_{sv1}$ to $g_{sv4}$, and $g_{sw1}$ to $g_{sw4}$ as second gate signals so that voltages based on the sinusoidal phase voltage commands $v_{su}{}^*$, $v_{sv}{}^*$, and $v_{sw}{}^*$ are applied to the motor 2.

The gate signals $g_{mu1}$ to $g_{mu4}$, $g_{mv1}$ to $g_{mv4}$, and $g_{mw1}$ to $g_{mw4}$ are signals for controlling the operation of the inverter circuit 4, that is, gate signals for performing switching control on the semiconductor switching elements of the inverter circuit 4. More specific description is as follows.

The gate signal $g_{mu1}$ is a signal applied to a gate of a first semiconductor switching element of a first phase (for example, a u-phase), the gate signal $g_{mu2}$ is a signal applied to a gate of a second semiconductor switching element of the first phase, the gate signal $g_{mu3}$ is a signal applied to a gate of a third semiconductor switching element of the first phase, and the gate signal $g_{mu4}$ is a signal applied to a gate of a fourth semiconductor switching element of the first phase.

The gate signal $g_{mv1}$ is a signal applied to a gate of a first semiconductor switching element of a second phase (for example, a v-phase), the gate signal $g_{mv2}$ is a signal applied to a gate of a second semiconductor switching element of the second phase, the gate signal $g_{mv3}$ is a signal applied to a gate of a third semiconductor switching element of the second phase, and the gate signal $g_{mv4}$ is a signal applied to a gate of a fourth semiconductor switching element of the second phase.

The gate signal $g_{mw1}$ is a signal applied to a gate of a first semiconductor switching element of a third phase (for example, a w-phase), the gate signal $g_{mw2}$ is a signal applied to a gate of a second semiconductor switching element of the third phase, the gate signal $g_{mw3}$ is a signal applied to a gate of a third semiconductor switching element of the third phase, and the gate signal $g_{mw4}$ is a signal applied to a gate of a fourth semiconductor switching element of the third phase.

Next, the gate signals $g_{su1}$ to $g_{su4}$, $g_{sv1}$ to $g_{sv4}$, and $g_{sw1}$ to $g_{sw4}$ will be described.

The gate signals $g_{su1}$ to $g_{su4}$ are signals for controlling the operation of the H-bridge circuit 5, that is, gate signals for performing switching control on the semiconductor switching elements of the H-bridge circuit 5. Specifically, the gate signal $g_{su1}$ is a signal applied to a gate of a first semiconductor switching element placed on a high electric potential side of the second leg, the gate signal $g_{su2}$ is a signal applied to a gate of a second semiconductor switching element on a low electric potential side of the first leg, the gate signal $g_{su3}$ is a signal applied to a gate of a third semiconductor switching element on a low electric potential side of the second leg, and the gate signal $g_{su4}$ is a signal applied to a gate of a fourth semiconductor switching element on a high electric potential side of the first leg.

The gate signals $g_{sv1}$ to $g_{sv4}$ are signals for controlling the operation of the H-bridge circuit 6, that is, gate signals for performing switching control on the semiconductor switching elements of the H-bridge circuit 6. Specifically, the gate signal $g_{sv1}$ is a signal applied to a gate of a first semiconductor switching element placed on a high electric potential side of the second leg, the gate signal $g_{sv2}$ is a signal applied to a gate of a second semiconductor switching element on a low electric potential side of the first leg, the gate signal $g_{sv3}$ is a signal applied to a gate of a third semiconductor switching element on a low electric potential side of the second leg, and the gate signal $g_{sv4}$ is a signal applied to a gate of a fourth semiconductor switching element on a high electric potential side of the first leg.

The gate signals $g_{sw1}$ to $g_{sw4}$ are signals for controlling the operation of the H-bridge circuit 7, that is, gate signals for performing switching control on the semiconductor switching elements of the H-bridge circuit 7. Specifically, the gate signal $g_{sw1}$ is a signal applied to a gate of a first semiconductor switching element placed on a high electric potential side of the second leg, the gate signal $g_{sw2}$ is a signal applied to a gate of a second semiconductor switching element on a low electric potential side of the first leg, the gate signal $g_{sw3}$ is a signal applied to a gate of a third semiconductor switching element on a low electric potential side of the second leg, and the gate signal $g_{sw4}$ is a signal applied to a gate of a fourth semiconductor switching element on a high electric potential side of the first leg.

In the configuration of FIG. 1, the voltage applied to the motor 2 is a positive or negative direct current voltage obtained by appropriately combining the direct current voltage of the direct current power supply 3 and capacitor voltages of the H-bridge circuits 5, 6, and 7, and performing addition or subtraction of them in consideration of the combination and polarities thereof. The capacitor voltage is the voltage across the capacitor Cs. The direct current voltage of the direct current power supply 3 is denoted by "$v_{dc}$", and the capacitor voltage is denoted by "$v_{cs}$". Note that orientations of arrows attached to the symbols $v_{dc}$ and $v_{cs}$ represent their respective polarities. Also, in each embodiment, the capacitor voltage $v_{cs}$ is assumed to be held at a step width of the phase voltage of the inverter circuit 4 or less. Specifically, the step width of the phase voltage is set to be about half of one-half the voltage of the direct current power supply 3. That is, there is a relationship of $v_{cs}=v_{dc}/4$ between the capacitor voltage $v_{cs}$ and the direct current voltage $v_{dc}$.

In the configuration of FIG. 1, in a case where the output voltages of the H-bridge circuits 5, 6, and 7 are added to or subtracted from the output voltage of the inverter circuit 4, it has been known that harmonics are restrained and the output voltage closer to a sine wave can be obtained by making the step widths of the phase voltages of the H-bridge circuits 5, 6, and 7 to be values different from each other such that one of the values is the double of the other. For details, refer to 'Masaki Yamada et al.: "Development of a New Voltage Sag Compensator with a Gradationally Controlled Voltage Inverter", IEEJ Trans. IA, Vol. 127-D, No. 4, pp. 451-456 (2007)'.

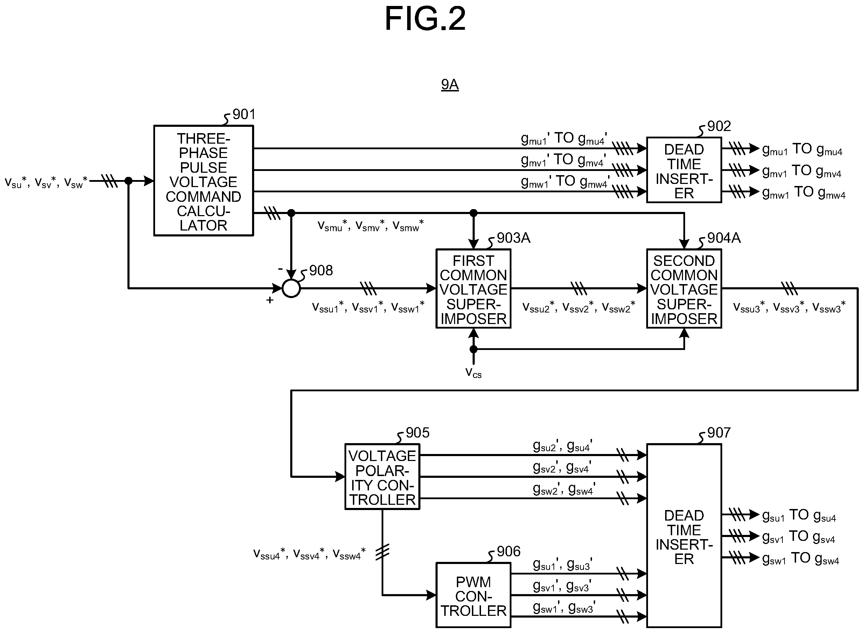

FIG. 2 is a block diagram illustrating a configuration of the power conversion controller 9A in the first embodiment. As illustrated in FIG. 2, the power conversion controller 9A of the first embodiment includes a three-phase pulse voltage command calculator 901, dead time inserters 902 and 907, a first common voltage superimposer 903A, a second common voltage superimposer 904A, a voltage polarity controller 905, a pulse width modulation (PWM) controller 906, and a subtractor 908.

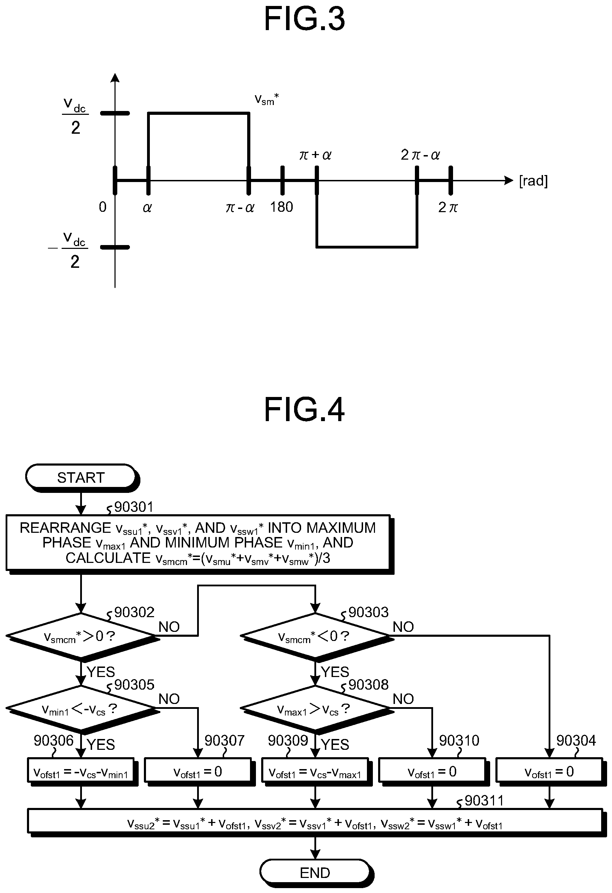

The three-phase pulse voltage command calculator 901 calculates three-phase pulse voltage commands $v_{smu}{}^{*}$, $v_{smv}{}^{*}$, and $v_{smw}{}^{*}$ to be issued to the inverter circuit 4. FIG. 3 illustrates a waveform for one phase of the three-phase pulse voltage commands $v_{smu}{}^{*}$, $v_{smv}{}^{*}$, and $v_{smw}{}^{*}$. FIG. 3 is a graph illustrating an example of the waveform for one phase of the three-phase pulse voltage commands generated by the three-phase pulse voltage command calculator 901 of FIG. 2.

The voltage waveform illustrated in FIG. 3 corresponds to one pulse voltage whose absolute value is a half of the direct current voltage $v_{dc}$ of the direct current power supply 3, the one pulse voltage having positive and negative polarities with each of the polarities being repeated once, in a fundamental wave period of the sinusoidal phase voltage commands $v_{su}{}^{*}$, $v_{sv}{}^{*}$, and $v_{sw}{}^{*}$. Using the one pulse voltage reduces the number of switching operations of the inverter circuit 4, thereby reducing the switching loss and improving the efficiency of the power converter 1.

In FIG. 3, the three-phase pulse voltage commands are represented by $v_{sm}{}^{*}$. Here, "$v_{sm}{}^{*}$" is a general notation for the three-phase pulse voltage commands $v_{smu}{}^{*}$, $v_{smv}{}^{*}$, and $v_{smw}{}^{*}$. Note that a similar notation is used as appropriate for the sinusoidal phase voltage commands. The horizontal axis in FIG. 3 represents the phase of the sinusoidal phase voltage command $v_{s}{}^{*}$.

As illustrated in FIG. 3, the one pulse voltage representing the three-phase pulse voltage command $v_{sm}{}^{*}$ has a voltage waveform that changes in accordance with the phase and a phase angle $\alpha$ of the sinusoidal phase voltage command $v_{s}{}^{*}$. Details of the phase angle $\alpha$ will be described below.

Specifically, in the example of FIG. 3, the value of the one pulse voltage is a zero value in phase ranges of zero to $\alpha$, $\pi-\alpha$ to $\pi+\alpha$, and $2\pi-\alpha$ to $2\pi$, is a positive value in a phase range of $\alpha$ to $\pi-\alpha$, and is a negative value in a phase range of $\pi+\alpha$ to $2\pi-\alpha$. Note that the zero value referred to herein does not mean a perfect zero value, and what is meant thereby is that a value close to zero is also allowed. That is, the zero value referred to herein is under a concept of including a value that can be regarded as substantially zero.

Here, in order to equalize the fundamental wave components of both the sinusoidal phase voltage command $v_s^*$ and the three-phase pulse voltage command $v_{sm}^*$, the aforementioned phase angle $\alpha$ is determined by the following expression (1) with $v^*_{sphp}$ as the amplitude of the sinusoidal phase voltage command $v_s^*$.

$$\alpha = \cos^{-1}(v^*_{sphp} \cdot \pi / (2 v_{dc})) \quad \ldots (1)$$

When the above expression (1) is satisfied, the inverter circuit 4 outputs the voltage of the fundamental wave component and shares all the electric power of the fundamental wave component supplied to the motor 2. Therefore, when the above expression (1) is satisfied, no direct current power supply is required on the direct current side of the H-bridge circuits 5, 6, and 7, whereby the power converter 1 can be reduced in size and cost. At this time, since the H-bridge circuits 5, 6, and 7 do not bear active power, the capacitor voltage $v_{cs}$ is maintained at about a quarter of the direct current voltage $v_{dc}$ that is the specified value.

Returning to the description for FIG. 2, the three-phase pulse voltage command calculator 901 generates the three-phase pulse voltage commands $v_{smu}^*$, $v_{smv}^*$, and $v_{smw}^*$, and at the same time generates gate signals $g_{mu1}'$ to $g_{mu4}'$, $g_{mv1}'$ to $g_{mv4}'$, and $g_{mw1}'$ to $g_{mw4}'$ for outputting voltages based on the three-phase pulse voltage commands $v_{smu}^*$, $v_{smv}^*$, and $v_{smw}^*$. However, at this point of time, a dead time for preventing an arm short circuit in the inverter circuit 4 is not inserted.

Table 1 below illustrates a relationship between an output voltage $v_{sm}$ outputted by the inverter circuit 4 and the gate signals $g_{m1}$ to $g_{m4}$ to the inverter circuit 4. The three-phase pulse voltage command calculator 901 generates the gate signals to the inverter circuit 4 using the relationship of Table 1.

[Table 1]

Table 1

| OUTPUT VOLTAGE $V_{sm}$ | $-V_{dc}/2$ | 0 | $V_{dc}/2$ |
|---|---|---|---|
| $g_{m1}$ | L | L | H |
| $g_{m2}$ | L | H | H |
| $g_{m3}$ | H | H | L |
| $g_{m4}$ | H | L | L |

In Table 1 above, "H" represents "high" and means a gate signal for controlling a corresponding semiconductor switching element to be on. Also, "L" represents "low" and means a gate signal for controlling a corresponding semiconductor switching element to be off.

In the subtractor 908, the three-phase pulse voltage commands $v_{smu}^*$, $v_{smv}^*$, and $v_{smw}^*$ to be issued to the inverter circuit 4 are subtracted from the sinusoidal phase voltage commands $v_{su}^*$, $v_{sv}^*$, and $v_{sw}^*$, and first phase voltage commands $v_{ssu1}^*$, $v_{ssv1}^*$, and $v_{ssw1}^*$, which are voltage commands to be issued to the H-bridge circuits 5, 6, and 7, are generated. That is, the three-phase pulse voltage command calculator 901 and the subtractor 908 divide the sinusoidal phase voltage commands $v_{su}^*$, $v_{sv}^*$, and $v_{sw}^*$ into: the three-phase pulse voltage commands $v_{smu}^*$, $v_{smv}^*$, and $v_{smw}^*$; and the first phase voltage commands $v_{ssu1}^*$, $v_{ssv1}^*$, and $v_{ssw1}^*$. The first phase voltage commands $v_{ssu1}^*$, $v_{ssv1}^*$, and $v_{ssw1}^*$ are calculated by the subtractor 908 so as to cancel changes in the output voltage outputted by the inverter circuit 4. With this processing, the power converter 1 can supply electirc power to the load while reducing noise and harmonics.

The first common voltage superimposer 903A calculates a first three-phase common voltage common to the three phases on the basis of the three-phase pulse voltage commands $v_{smu}^*$, $v_{smv}^*$, and $v_{smw}^*$. The first common voltage superimposer 903A superimposes the calculated first three-phase common voltage on the first phase voltage commands $v_{ssu1}^*$, $v_{ssv1}^*$, and $v_{ssw1}^*$, and outputs voltages obtained by the superimposing process to the second common voltage superimposer 904A as second phase voltage commands $v_{ssu2}^*$, $v_{ssv2}^*$, and $v_{ssw2}^*$. The capacitor voltage $v_{cs}$ is used for generating the second phase voltage commands $v_{ssu2}^*$, $v_{ssv2}^*$, and $v_{ssw2}^*$. The first three-phase common voltage is calculated so that peak values of the second phase voltage commands $v_{ssu2}^*$, $v_{ssv2}^*$, and $v_{ssw2}^*$ are reduced.

The second common voltage superimposer 904A calculates a second three-phase common voltage common to the three phases on the basis of the three-phase pulse voltage commands $v_{smu}^*$, $v_{smv}^*$, and $v_{smw}^*$. The second common voltage superimposer 904A superimposes the calculated second three-phase common voltage on the second phase voltage commands $v_{ssu2}^*$, $v_{ssv2}^*$, and $v_{ssw2}^*$, and outputs voltages obtained by the superimposing process to the voltage polarity controller 905 as third phase voltage commands $v_{ssu3}^*$, $v_{ssv3}^*$, and $v_{ssw3}^*$.

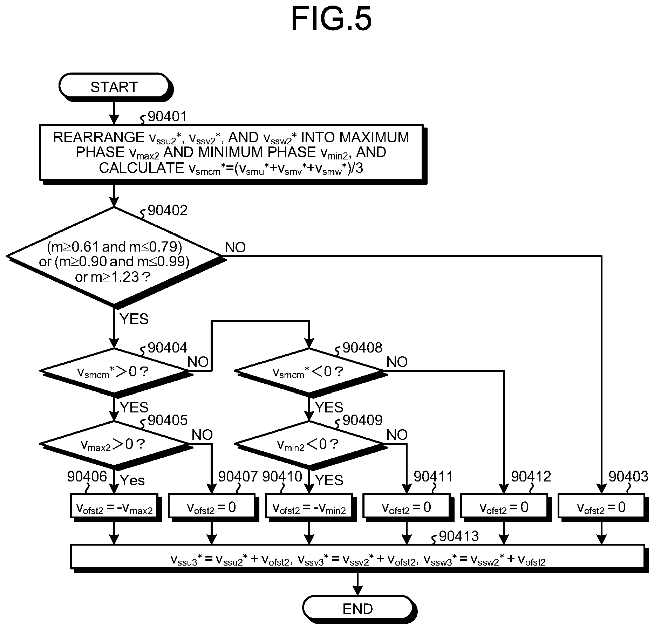

The operations of the first common voltage superimposer 903A and the second common voltage superimposer 904A will be further described with reference to FIGS. 4 and 5. FIG. 4 is a flowchart used to describe the operation of the first common voltage superimposer 903A in the first embodiment. FIG. 5 is a flowchart used to describe the operation of the second common voltage superimposer 904A in the first embodiment.

In FIG. 4, the first common voltage superimposer 903A rearranges the first phase voltage commands $v_{ssu1}^*$, $v_{ssv1}^*$, and $v_{ssw1}^*$ into a maximum phase $v_{max1}$ and a minimum phase $v_{min1}$, and also calculates a common mode voltage $v_{smcm}^*$ of the three-phase pulse voltage commands $v_{smu}^*$, $v_{smv}^*$, and $v_{smw}^*$ using the following expression (2) (step 90301).

$$v_{smcm}^* = ( v_{smu}^* + v_{smv}^* + v_{smw}^* ) / 3 \quad \dots (2)$$

Next, the first common voltage superimposer 903A determines whether the common mode voltage $v_{smcm}^*$ is positive (step 90302), or negative or zero (step 90303). If the common mode voltage $v_{smcm}^*$ is zero (No in step 90302 and No in step 90303), the first common voltage superimposer 903A sets the first three-phase common voltage as $v_{ofst1}=0$ (step 90304).

If the common mode voltage $v_{smcm}^*$ of the three-phase pulse voltage commands $v_{smu}^*$, $v_{smv}^*$, and $v_{smw}^*$ is positive (Yes in step 90302), the operation is performed such that the common mode voltage of the first phase voltage commands $v_{ssu1}^*$, $v_{ssv1}^*$, and $v_{ssw1}^*$ is negative in order to reduce a change in voltage of the common mode voltage $v_{smcm}^*$. At this time, it is determined whether the minimum phase $v_{min1}$ does not exceed a minimum value $-v_{cs}$ that can be outputted, that is, whether or not the value of the minimum phase $v_{min1}$ is less than the minimum value $-v_{cs}$ (step 90305). If the minimum phase $v_{min1}$ is less than the minimum value $-v_{cs}$ (Yes in step 90305), the first three-phase common voltage $v_{ofst1}$ is determined such that the minimum phase $v_{min1}$ is equal to the minimum value $-v_{cs}$ (step 90306). On the other hand, if the minimum phase $v_{min1}$ is not less than the minimum value $-v_{cs}$ (No in step 90305), the first three-phase common voltage is set as $v_{ofst1}=0$ (step 90307).

If the common mode voltage $v_{smcm}^*$ of the three-phase pulse voltage commands $v_{smu}^*$, $v_{smv}^*$, and $v_{smw}^*$ is negative (Yes in step 90303), the operation is performed such that the common mode voltage of the first phase voltage commands $v_{ssu1}^*$, $v_{ssv1}^*$, and $v_{ssw1}^*$ is positive in order to reduce a change in voltage of the common mode voltage $v_{smcm}^*$. At this time, it is determined whether or not the maximum phase $v_{max1}$ exceeds a maximum value $v_{cs}$ that can be outputted (step 90308). If the maximum phase $v_{max1}$ exceeds the maximum value $v_{cs}$ (Yes in step 90308), the first three-phase common voltage $v_{ofst1}$ is determined so that the maximum phase $v_{max1}$ is equal to the maximum value $v_{cs}$ (step 90309). On the other hand, if the maximum phase $v_{max1}$ does not exceed the maximum value $v_{cs}$ (No in step 90308), the first three-phase common voltage is set as $v_{ofst1}=0$ (step 90310).

Finally, the first common voltage superimposer 903A superimposes the first three-phase common voltage $v_{ofst1}$ on the first phase voltage commands $v_{ssu1}^*$, $v_{ssv1}^*$, and $v_{ssw1}^*$ to generate the second phase voltage commands $v_{ssu2}^*$, $v_{ssv2}^*$, and $v_{ssw2}^*$ (step 90311). Note that the second phase voltage commands $v_{ssu2}^*$, $v_{ssv2}^*$, and $v_{ssw2}^*$ are phase voltage commands that are temporarily generated and are in the process of being corrected.

Next, the operation of the second common voltage superimposer 904A will be described with reference to FIG. 5.

In FIG. 5, the second common voltage superimposer 904A rearranges the second phase voltage commands $v_{ssu2}^*$, $v_{ssv2}^*$, and $v_{ssw2}^*$ into a maximum phase $v_{max2}$ and a minimum phase $v_{min2}$, and also calculates the common mode voltage $v_{smcm}^*$ of the three-phase pulse voltage commands $v_{smu}^*$, $v_{smv}^*$, and $v_{smw}^*$ using the above expression (2) (step 90401).

Note that when the amplitude of the sinusoidal phase voltage commands $v_{su}^*$, $v_{sv}^*$, and $v_{sw}^*$ is represented by "$v_{sphp}^*$", a value obtained by dividing the amplitude $v_{sphp}^*$ by a half of the direct current voltage $v_{dc}$ of the direct current power supply 3 is defined as a modulation factor "m". Specifically, the modulation factor "m" can be expressed by the following expression (3).

$$m = ( v_{sphp}^* / ( v_{dc} / 2 ) ) \quad \dots (3)$$

The second common voltage superimposer 904A determines whether or not the modulation factor "m" is 0.61 or more and 0.79 or less, whether or not it is 0.90 or more and 0.99 or less, or whether or not it is 1.23 or more (step 90402). If none of these conditions is satisfied (No in step 90402), the second three-phase common voltage is set as $v_{ofst2}=0$ (step 90403). On the other hand, if any one of the conditions is satisfied (Yes in step 90402), the second common voltage superimposer 904A determines whether the common mode voltage $v_{smcm}^*$ is positive (step 90404), or whether it is negative or zero (step 90408). If the common mode voltage $v_{smcm}^*$ is zero (No in step 90404 and No in step 90408), the second common voltage superimposer 904A sets the second three-phase common voltage as $v_{ofst2}=0$ (step 90412) .

If the common mode voltage $v_{smcm}^*$ of the three-phase pulse voltage commands $v_{smu}^*$, $v_{smv}^*$, and $v_{smw}^*$ is positive (Yes in step 90404), it is determined whether or not the maximum phase $v_{max2}$ exceeds zero (step 90405). If the maximum phase $v_{max2}$ exceeds zero (Yes in step 90405), the second three-phase common voltage is set as $v_{ofst2}=-v_{max2}$ (step 90406), or if the maximum phase $v_{max2}$ does not exceed zero (No in step 90405), the second three-phase common voltage is set as $v_{ofst2}=0$ (step 90407). As a result, the maximum phase $v_{max2}$ is controlled to be zero or negative.

If the common mode voltage $v_{smcm}^*$ of the three-phase pulse voltage commands $v_{smu}^*$, $v_{smv}^*$, and $v_{smw}^*$ is negative (Yes in step 90408), it is determined whether or not the minimum phase $v_{min2}$ is less than zero (step 90409) . If the minimum phase $v_{min2}$ is less than zero (Yes in step 90409), the second three-phase common voltage is set as $v_{ofst2}=-v_{min2}$ (step 90410), or if the minimum phase $v_{min2}$ is zero or more (No in step 90409), the second three-phase common voltage is set as $v_{ofst2}=0$ (step 90411). As a result, the minimum phase $v_{min2}$ is controlled to be zero or positive.

Finally, the second common voltage superimposer 904A superimposes the second three-phase common voltage $v_{ofst2}$ on the second phase voltage commands $v_{ssu2}^*$, $v_{ssv2}^*$, and $v_{ssw2}^*$ to generate the third phase voltage commands $v_{ssu3}^*$, $v_{ssv3}^*$, and $v_{ssw3}^*$ (step 90413). As described above, the third phase voltage commands $v_{ssu3}^*$, $v_{ssv3}^*$, and $v_{ssw3}^*$ are phase voltage commands having been subjected to correction, which are generated using the phase voltage commands being corrected.

By the above processing, in a period in which the common mode voltage $v_{smcm}^*$ of the three-phase pulse voltage commands $v_{smu}^*$, $v_{smv}^*$, and $v_{smw}^*$, that is, a three-phase sum of the three-phase pulse voltage commands $v_{smu}^*$, $v_{smv}^*$, and $v_{smw}^*$ is not zero, the positive/negative polarity of the third phase voltage commands $v_{ssu3}^*$, $v_{ssv3}^*$, and $v_{ssw3}^*$ is not switched. Furthermore, the positive/negative polarity of the third phase voltage commands $v_{ssu3}^*$, $v_{ssv3}^*$, and $v_{ssw3}^*$ does not change from that of the first phase voltage commands $v_{ssu1}^*$, $v_{ssv1}^*$, and $v_{ssw1}^*$ that are voltage commands before the correction. This can reduce the number of switching operations in the H-bridge circuits 5, 6, and 7, and thus can reduce the switching loss in the power converter 1.

Returning to the description for FIG. 2, the voltage polarity controller 905 generates gate signals $g_{su2}'$, $g_{su4}'$, $g_{sv2}'$, $g_{sv4}'$, $g_{sw2}'$, and $g_{sw4}'$ for the first legs in the H-bridge circuits 5, 6, and 7, that is, the legs whose midpoints are connected to the inverter circuit 4, on the basis of the polarity of the third phase voltage commands $v_{ssu3}^*$, $v_{ssv3}^*$, and $v_{ssw3}^*$. The voltage polarity controller 905 also generates fourth phase voltage commands $v_{ssu4}^*$, $v_{ssv4}^*$, and $v_{ssw4}^*$ that are voltage commands for PWM modulation to generate gate signals $g_{su1}'$, $g_{su3}'$, $g_{sv1}'$, $g_{sv3}'$, $g_{sw1}'$, and $g_{sw3}'$ for the second legs in the H-bridge circuits 5, 6, and 7, that is, the legs whose midpoints are connected to the motor 2, on the basis of the polarity of the third phase voltage commands $v_{ssu3}^*$, $v_{ssv3}^*$, and $v_{ssw3}^*$.

The PWM controller 906 generates the gate signals $g_{su1}'$, $g_{su3}'$, $g_{sv1}'$, $g_{sv3}'$, $g_{sw1}'$, and $g_{sw3}'$ for the second legs in the H-bridge circuits 5, 6, and 7 on the basis of fourth phase voltage commands $v_{ssu4}^*$, $v_{ssv4}^*$, and $v_{ssw4}^*$.

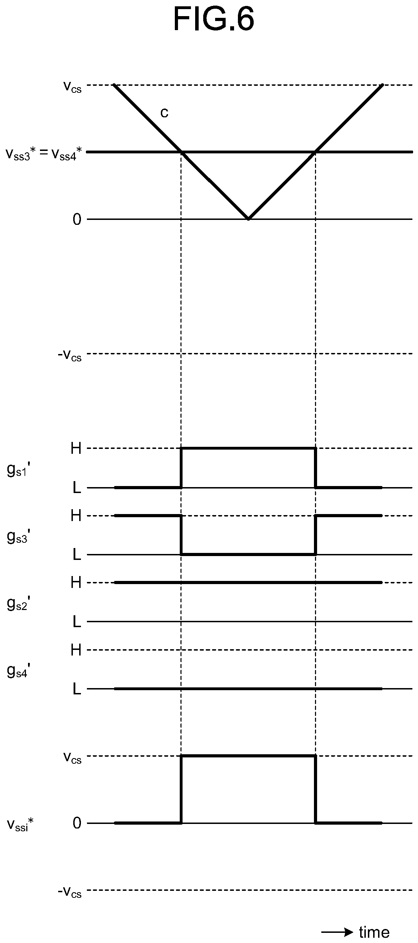

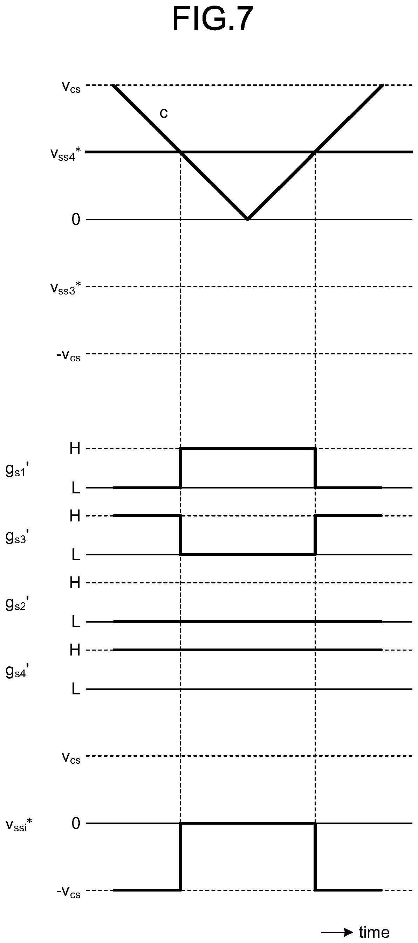

FIG. 6 is a first chart used to describe the operations of the voltage polarity controller 905 and the PWM controller 906 in the first embodiment. FIG. 7 is a second chart used to describe the operations of the voltage polarity controller 905 and the PWM controller 906 in the first embodiment.

The horizontal axes in FIGS. 6 and 7 both represent time. In FIGS. 6 and 7, from the upper side, signals corresponding to the third phase voltage command $v_{ss3}^*$ and the fourth phase voltage command $v_{ss4}^*$, the gate signals $g_{s1}'$, $g_{s3}'$, $g_{s2}'$, and $g_{s4}'$, and a voltage command $v_{ssi}^*$ as an instantaneous value for an arbitrary phase are indicated by thick lines. Moreover, a waveform of a carrier signal "c" is indicated by a thick line in the upper part. The carrier signal "c" is a triangular wave signal that changes between a zero voltage and the capacitor voltage $v_{cs}$. Note that the period of the carrier signal "c" may be referred to as a "carrier period".

FIG. 6 illustrates operation waveforms in a case where the third phase voltage command satisfies $v_{ss3}^* \geq 0$. In this case, the voltage polarity controller 905 sets the gate signals $g_{s2}'$ and $g_{s4}'$ as $g_{s2}'=H$ and $g_{s4}'=L$. In addition, the PWM controller 906 generates the gate signals $g_{s1}'$ and $g_{s3}'$ based on comparison between the value of the fourth phase voltage command $v_{ss4}^*$ and the value of the carrier signal "c". Specifically, when $v_{ss4}^*>c$, the gate signals are set as $g_{s1}'=H$ and $g_{s3}'=L$. When $v_{ss4}^* \leq c$, the gate signals are set as $g_{s1}'=L$ and $g_{s3}'=H$. At this time, the voltage command $v_{ssi}^*$ as the instantaneous value is zero or $v_{cs}$ as indicated in the lower part of FIG. 6. As can be understood from the waveform of the voltage command $v_{ssi}^*$, the operation waveforms according to the voltage polarity controller 905 and the PWM controller 906 amount to outputting the third phase voltage command $v_{ss3}^*$ as an average value.

FIG. 7 illustrates operation waveforms in a case where the third phase voltage command satisfies $v_{ss3}^*<0$. What is noteworthy is that a value obtained by adding the capacitor voltage $v_{cs}$ to the value of the third phase voltage command $v_{ss3}^*$ is the value of the fourth phase voltage command $v_{ss4}^*$. Note that the addition of the capacitor voltage $v_{cs}$ is performed for a phase in which $v_{ss3}^*<0$ is satisfied.

In the case of FIG. 7, the voltage polarity controller 905 sets the gate signals $g_{s2}'$ and $g_{s4}'$ as $g_{s2}'=L$ and $g_{s4}'=H$.

In addition, the PWM controller 906 generates the gate signals $g_{s1}$' and $g_{s3}$' based on comparison between the value of the fourth phase voltage command $v_{ss4}$* and the value of the carrier signal "c". Specifically, when $v_{ss4}$*>c, the gate signals are set as $g_{s1}$'=H and $g_{s3}$'=L. When $v_{ss4}$*≤c, the gate signals are set as $g_{s1}$'=L and $g_{s3}$'=H. This processing is the same as in the case of FIG. 6. At this time, the voltage command $v_{ssi}$* as the instantaneous value is -$v_{cs}$ or zero as indicated in the lower part of FIG. 7. In the waveforms illustrated in FIG. 7 as well, the operation waveforms according to the voltage polarity controller 905 and the PWM controller 906 amount to outputting the third phase voltage command $v_{ss3}$* as an average value.

Table 2 below represents a relationship between an output voltage $V_{ss}$ of the H-bridge circuits 5, 6, and 7 and the gate signals $g_{s1}$ to $g_{s4}$ to the H-bridge circuits 5, 6, and 7. The voltage polarity controller 905 and the PWM controller 906 generate the gate signals to the H-bridge circuits 5, 6, and 7 using the relationship of Table 2.

[Table 2]

Table 2

| OUTPUT VOLTAGE $v_{ss}$ | -$v_{cs}$ | 0 | | $v_{dc}/2$ |
|---|---|---|---|---|
| $g_{m1}$ | L | H | L | H |
| $g_{m2}$ | L | L | H | H |
| $g_{m3}$ | H | L | H | L |
| $g_{m4}$ | H | H | L | L |

In Table 2 above, "H" represents "high", which means a gate signal for controlling a corresponding semiconductor switching element to be on. In addition, "L" represents "low", which means a gate signal for controlling a corresponding semiconductor switching element to be off.

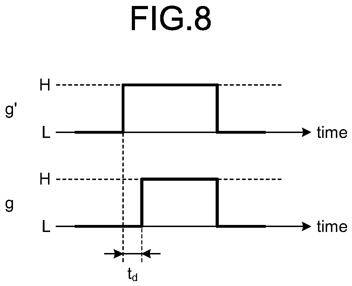

Returning to the description for FIG. 2, the dead time inserter 902 generates new gate signals $g_{mu1}$ to $g_{mu4}$, $g_{mv1}$ to $g_{mv4}$, and $g_{mw1}$ to $g_{mw4}$ by inserting a dead time into the gate signals $g_{mu1}$' to $g_{mu4}$', $g_{mv1}$' to $g_{mv4}$', and $g_{mw1}$' to $g_{mw4}$'. In addition, the dead time inserter 907 generates new gate signals $g_{mu1}$ to $g_{mu4}$, $g_{mv1}$ to $g_{mv4}$, and $g_{mw1}$ to $g_{mw4}$ by inserting a dead time into the gate signals $g_{mu1}$' to $g_{mu4}$', $g_{mv1}$' to $g_{mv4}$', and $g_{mw1}$' to $g_{mw4}$'. FIG. 8 illustrates a dead time insertion method. FIG. 8 is a chart illustrating the dead time insertion method in the dead time inserters 902 and 907 of the first embodiment.

In FIG. 8, a waveform of "g'" in the upper part represents the gate signal before the insertion of the dead time, and a waveform of "g" in the lower part represents the gate signal after the insertion of the dead time. In the present description, as illustrated in FIG. 8, a dead time $t_d$ is inserted so as to cause a delay by the dead time $t_d$ at the timing when the gate signal changes from "L" to "H". Note that FIG. 8 is an example, and the insertion or setting of the dead time $t_d$ may be performed using a method other than the method illustrated in FIG. 8.

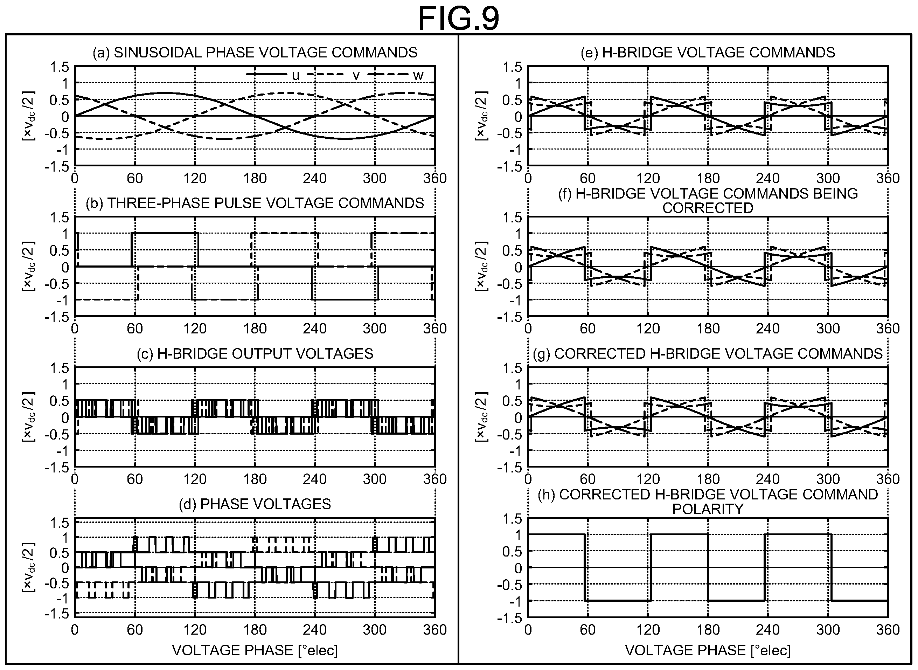

Next, main points of the operation of the power converter 1 according to the first embodiment will be described using operation waveforms of main parts. FIG. 9 is a diagram illustrating the operation waveforms in the case of absence of both the first common voltage superimposer 903A and the second common voltage superimposer 904A in the configuration of the first embodiment. The modulation factor "m" is 0.70.

On the left side of FIG. 9, waveforms of the (a) sinusoidal phase voltage commands, (b) three-phase pulse voltage commands, (c) H-bridge output voltages, and (d) phase voltages are illustrated in order from the top. On the right side of FIG. 9, waveforms of (e) H-bridge voltage commands, (f) H-bridge voltage commands being corrected, (g) corrected H-bridge voltage commands, and (h) corrected H-bridge voltage command polarity are illustrated in order from the top. The "H-bridge voltage commands" represent the first phase voltage commands $v_{ssu1}$*, $v_{ssv1}$*, and $v_{ssw1}$* described above, the "H-bridge voltage commands being corrected" represent the second phase voltage commands $v_{ssu2}$*, $v_{ssv2}$*, and $v_{ssw2}$* described above, and the "corrected H-bridge voltage commands" represent the third phase voltage commands $v_{ssu3}$*, $v_{ssv3}$*, and $v_{ssw3}$* described above. The "corrected H-bridge voltage command polarity" represents the polarity of the corrected H-bridge voltage commands. The "H-bridge output voltages" are the output voltages of the H-bridge circuits 5, 6, and 7. The "phase voltages" are the voltages outputted from the phases of the inverter circuit 4. The operation waveforms are normalized with "$v_{dc}/2$". In the operation waveforms, a U-phase waveform is represented by a solid line, a V-phase waveform is represented by a broken line, and a W-phase waveform is represented by an alternate long and short dash line. These representations are applied in common to other operation waveforms described below.

The operation waveforms of FIG. 9 will be described below. Note that in order to simplify the description, the names given to the operation waveforms in FIG. 9 will be used in the description, and the symbols given to the voltage commands and so on in the above description will be omitted as appropriate. The same applies to description for other drawings.

As described above, in the power converter 1, the "sinusoidal phase voltage commands" are calculated so that the motor 2 is operated with the desired torque command T*. Moreover, the "pulse voltage commands" are calculated by the three-phase pulse voltage command calculator 901, and the "H-bridge voltage commands" are obtained by subtracting the "three-phase pulse voltage commands" from the "sinusoidal phase voltage commands". In the example of FIG. 9, since both the first common voltage superimposer 903A and the second common voltage superimposer 904A are absent, the "H-bridge voltage commands" directly serve as the "corrected H-bridge voltage commands". The voltage polarity controller 905 generates the gate signals for the first legs in the H-bridge circuits 5, 6, and 7 and also generates the "H-bridge voltage commands" for the PWM modulation, on the basis of the polarity of the "corrected H-bridge voltage commands".

Referring now to the waveform of the "corrected H-bridge voltage command polarity" in FIG. 9, the polarity of the "corrected H-bridge voltage commands" changes six times in the fundamental wave period of the "sinusoidal phase voltage commands". That is, the first legs of the H-bridge circuits 5, 6, and 7 are switched six times. The PWM controller 906 performs PWM control on the basis of the fourth phase voltage commands $v_{ssu4}^*$, $v_{ssv4}^*$, and $v_{ssw4}^*$ for the PWM modulation, and the H-bridge circuits 5, 6, and 7 output the "H-bridge output voltages". The "H-bridge output voltages" have waveforms of instantaneous voltages of the H-bridge circuits 5, 6, and 7. The "phase voltages" outputted by the power converter 1 are each a sum of the "three-phase pulse voltage command" and the "H-bridge output voltage", and have each a quasi-sinusoidal waveform. As a result, the "phase voltages" with less noise and harmonic components are obtained.

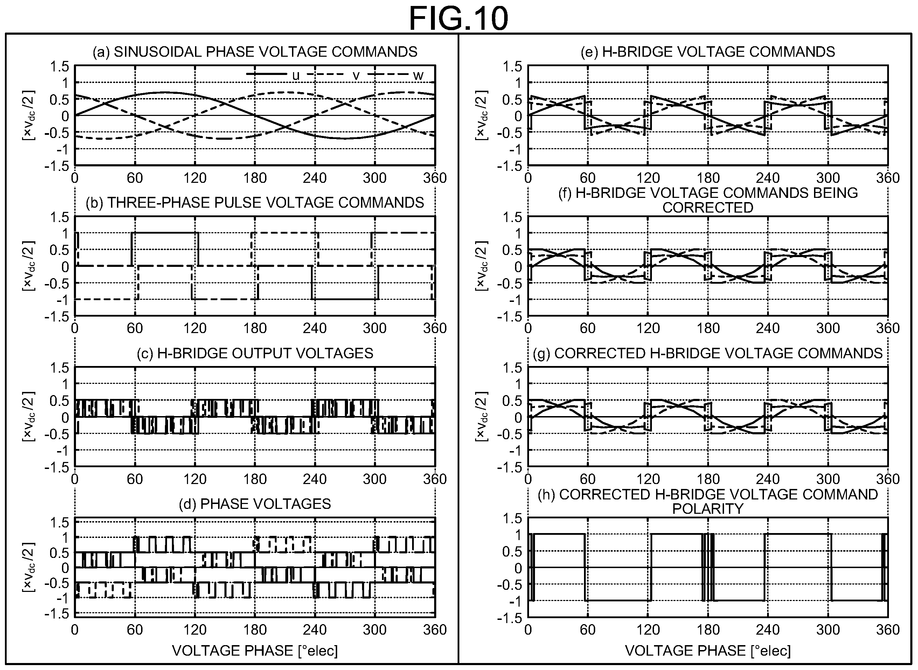

In a case where the first common voltage superimposer 903A is absent, as illustrated in FIG. 9, the "H-bridge voltage commands" exceed the maximum value $v_{cs}$ (=$v_{dc}/4$) and the minimum value -$v_{cs}$ that can be outputted. For this reason, distortion occurs in the "phase voltages" outputted by the power converter 1. Now, FIG. 10 illustrates operation waveforms in a case where the first common voltage superimposer 903A is additionally provided. That is, FIG. 10 is a diagram illustrating the operation waveforms in the case of absence of the second common voltage superimposer 904A in the configuration of the first embodiment. Note that the modulation factor "m" is the same as that in FIG. 9 and is m=0.70.

In FIG. 10, the first three-phase common voltage is calculated by the first common voltage superimposer 903A and superimposed on the "H-bridge voltage commands". As a result, there are obtained the "H-bridge voltage commands being corrected" that do not exceed the maximum value and the minimum value that can be outputted by the H-bridge circuits 5, 6, and 7. In the example of FIG. 10, since the second common voltage superimposer 904A is absent, the "H-bridge voltage commands being corrected" directly serve as the "corrected H-bridge voltage commands". Since the "corrected H-bridge voltage commands" do not exceed the maximum value and the minimum value that can be outputted, the "phase voltages" having less harmonic components are obtained.

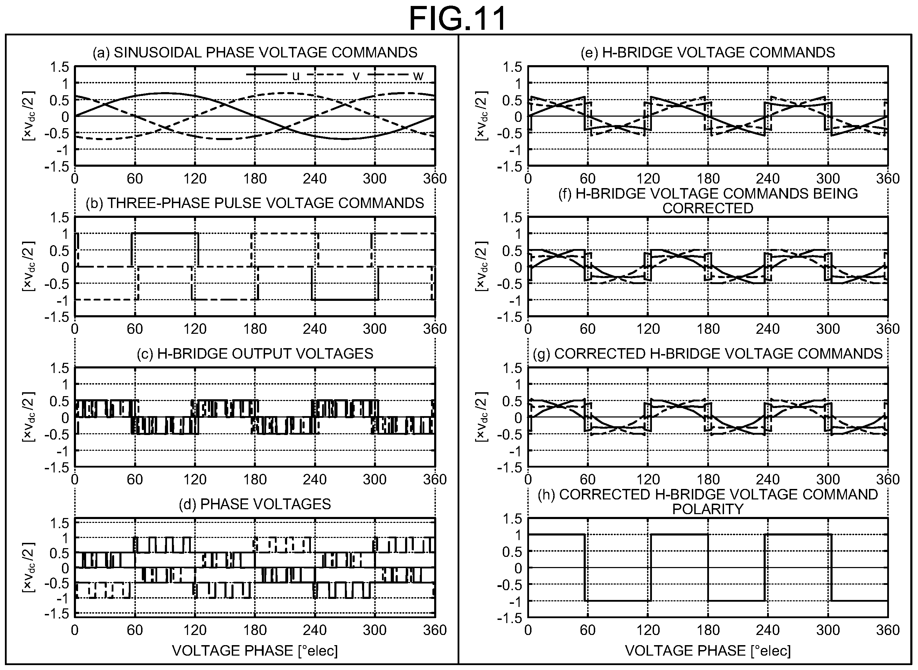

However, referring to the waveform of the "corrected H-bridge voltage command polarity" in FIG. 10, the number of changes in polarity of the "corrected H-bridge voltage commands" is increased to 14 times in the fundamental wave period of the "sinusoidal phase voltage commands". As a result, the number of switching operations of the first legs of the H-bridge circuits 5, 6, and 7 is increased. This causes a problem in that switching loss increases. In order to solve this problem, the second common voltage superimposer 904A is provided. FIG. 11 illustrates operation waveforms in a case where the second common voltage superimposer 904A is additionally provided. That is, FIG. 11 is a diagram illustrating operation waveforms of the configuration of FIG. 2 in the first embodiment. Note that the modulation factor "m" is the same as that in FIGS. 9 and 10 and is m=0.70.

During a period in which a three-phase sum of the "three-phase pulse voltage commands" is not zero, the second common voltage superimposer 904A calculates the second three-phase common voltage so that the positive/negative polarity of the "corrected H-bridge voltage commands" is not switched, and superimposes the calculated second three-phase common voltage on the "H-bridge voltage commands being corrected". In the example of FIG. 11, the modulation factor is 0.70, and so when the common mode voltage of the "three-phase pulse voltage commands" is positive, the second three-phase common voltage is calculated so that the maximum value for three phases of the "H-bridge voltage commands being corrected" is zero or negative. On the other hand, when the common mode voltage of the "three-phase pulse voltage commands" is negative, the second three-phase common voltage is calculated so that the maximum value for three phases of the "H-bridge voltage commands being corrected" is zero or positive. As a result, the positive/negative polarity of the "corrected H-bridge voltage commands" is not switched during the period in which the three-phase sum of the "three-phase pulse voltage commands" is not zero. Furthermore, in the first embodiment, the positive/negative polarity of the "corrected H-bridge voltage commands" does not change from that of the "H-bridge voltage commands" before the correction. As a result, the number of changes in polarity of the "corrected H-bridge voltage commands" is reduced to six times in the fundamental wave period of the "sinusoidal phase voltage commands". That is, since the number of switching operations of the first legs of the H-bridge circuits 5, 6, and 7 is reduced, the switching loss is reduced accordingly. Therefore, according to the first embodiment, it is possible to reduce the switching loss of the first legs of the H-bridge circuits 5, 6, and 7 while reducing the distortion of the "phase voltages" by preventing a voltage exceeding the maximum value and the minimum value that can be outputted by the "H-bridge voltage commands" from being outputted.

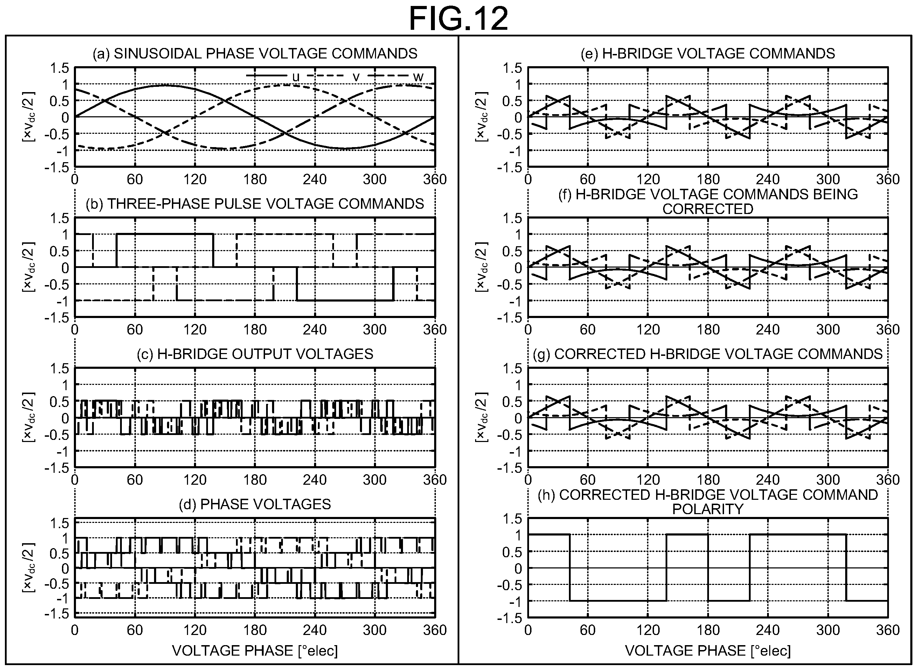

Next, FIG. 12 illustrates operation waveforms in the case of absence of both the first common voltage superimposer 903A and the second common voltage superimposer 904A when the modulation factor "m" is 0.95. That is, FIG. 12 is a diagram illustrating the operation waveforms in the case of absence of both the first common voltage superimposer 903A and the second common voltage superimposer 904A in the configuration of the first embodiment.

Referring to the waveform of the "corrected H-bridge voltage command polarity" in FIG. 12, the polarity of the "corrected H-bridge voltage commands" changes six times in the fundamental wave period of the "sinusoidal phase voltage commands", and thus the first legs of the H-bridge circuits 5, 6, and 7 are switched six times. In addition, the "H-bridge voltage commands" exceed the maximum value $v_{cs}$ ($=v_{dc}/4$) and the minimum value $-v_{cs}$ that can be outputted. As a result, distortion occurs in the "phase voltages" outputted by the power converter 1.

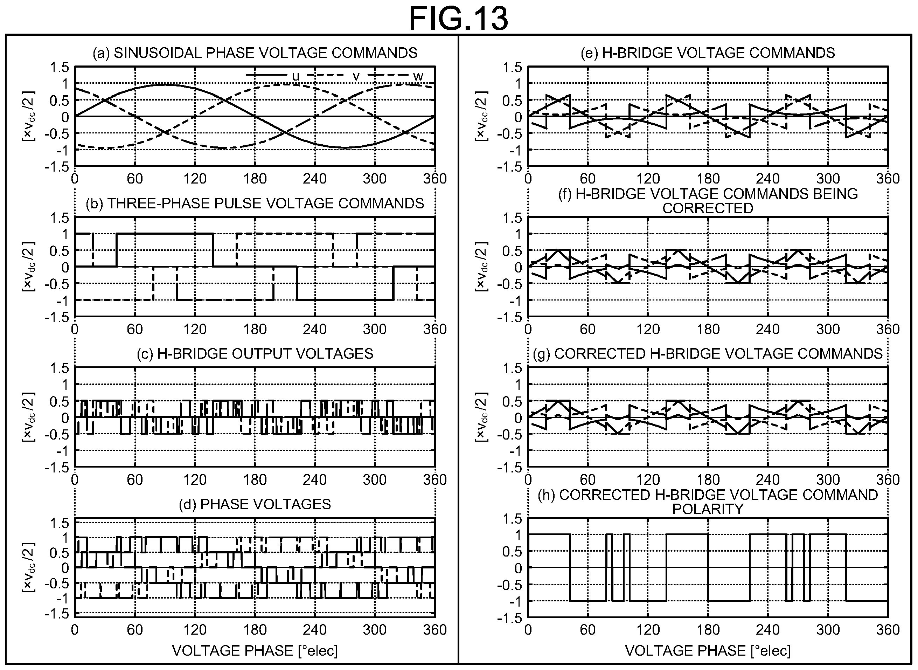

Now, FIG. 13 illustrates operation waveforms in a case where the first common voltage superimposer 903A is additionally provided. That is, FIG. 13 is a diagram illustrating the operation waveforms in the case of absence of the second common voltage superimposer 904A in the configuration of the first embodiment. Note that the modulation factor "m" is the same as that in FIG. 12 and is m=0.95.

In FIG. 13, since the "corrected H-bridge voltage commands" do not exceed the maximum value and the minimum value that can be outputted, the "phase voltages" having less harmonic components are obtained. However, the number of changes in polarity of the "corrected H-bridge voltage commands" is increased to 14 times in the fundamental wave period of the "sinusoidal phase voltage commands".

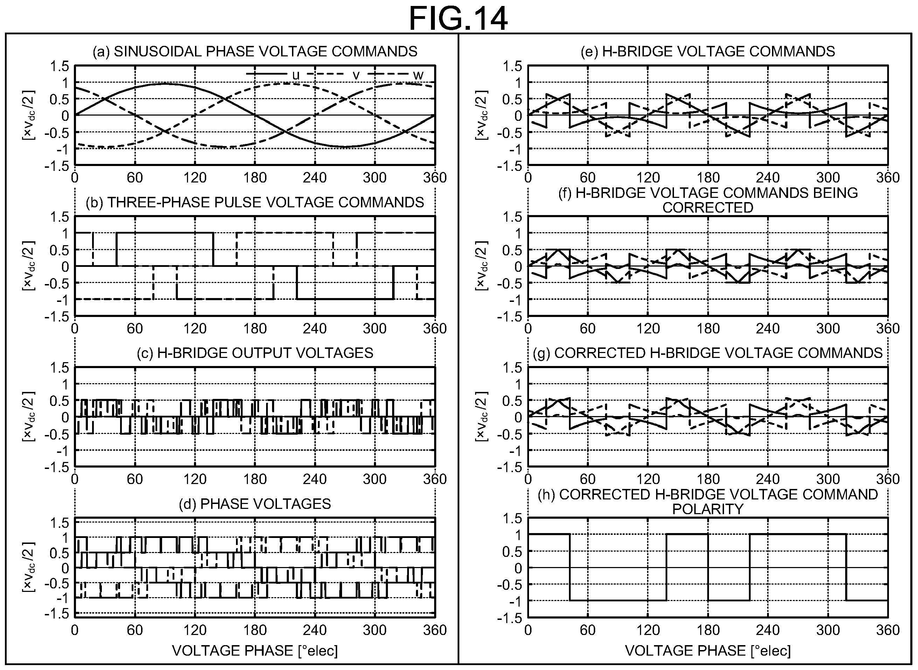

Next, FIG. 14 illustrates operation waveforms in a case where the second common voltage superimposer 904A is further added. That is, FIG. 14 is a diagram illustrating operation waveforms of the configuration of FIG. 2 in the first embodiment. Note that the modulation factor "m" is the same as that in FIGS. 12 and 13 and is m=0.95.

As can be understood from the flowchart of FIG. 5, the operation in the case of the modulation factor being m=0.95 is the same as that in the case of the modulation factor being m=0.70. During the period in which the three-phase sum of the "three-phase pulse voltage commands" by the second common voltage superimposer 904A is not zero, the positive/negative polarity of the "corrected H-bridge voltage commands" is not switched. Furthermore, the positive/negative polarity of the "corrected H-bridge voltage commands" does not change from that of the "H-bridge voltage commands" before the correction. As a result, as in the case of the modulation factor being m=0.70, the number of changes in polarity of the "corrected H-bridge voltage commands" is reduced to six times in the fundamental wave period of the "sinusoidal phase voltage commands". That is, since the number of switching operations of the first legs of the H-bridge circuits 5, 6, and 7 is reduced, the switching loss is reduced accordingly. Therefore, it is possible to reduce a first switching loss of the H-bridge circuits 5, 6, and 7 while reducing the distortion of the "phase voltages" by preventing a voltage exceeding the maximum value and the minimum value that can be outputted by the "H-bridge voltage commands" from being outputted.

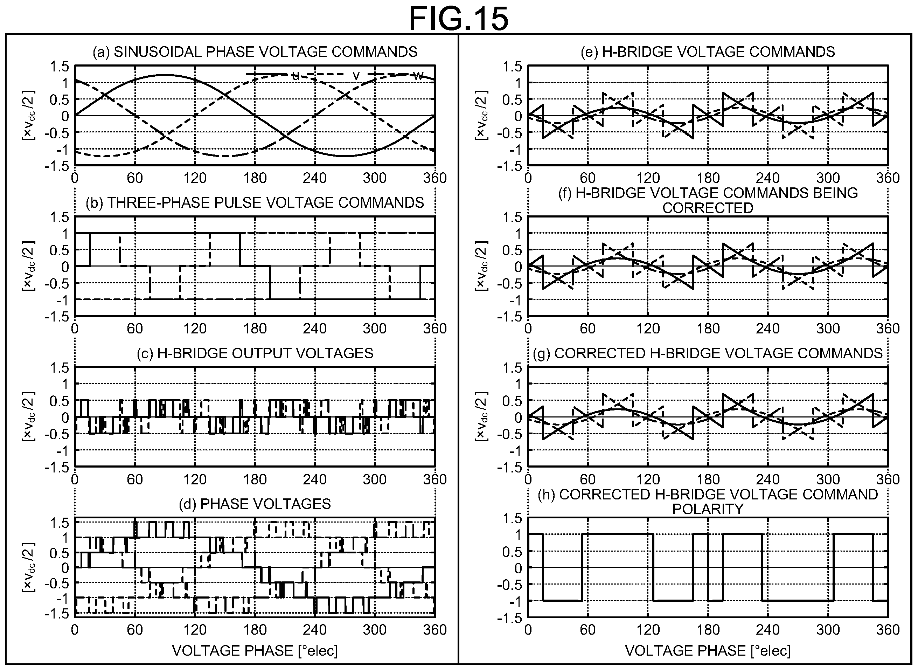

Next, FIG. 15 illustrates operation waveforms in the case of absence of both the first common voltage superimposer 903A and the second common voltage superimposer 904A when the modulation factor "m" is 1.23. That is, FIG. 15 is a diagram illustrating the operation waveforms in the case of absence of both the first common voltage superimposer 903A and the second common voltage superimposer 904A in the configuration of the first embodiment.

Referring to the waveform of the "corrected H-bridge voltage command polarity" in FIG. 15, the polarity of the "corrected H-bridge voltage commands" changes ten times in the fundamental wave period of the "sinusoidal phase voltage commands", and thus the first legs of the H-bridge circuits 5, 6, and 7 are switched ten times. In addition, the "H-bridge voltage commands" exceed the maximum value $v_{cs}$ ($=v_{dc}/4$) and the minimum value $-v_{cs}$ that can be outputted. As a result, distortion occurs in the "phase voltages" outputted by the power converter 1.

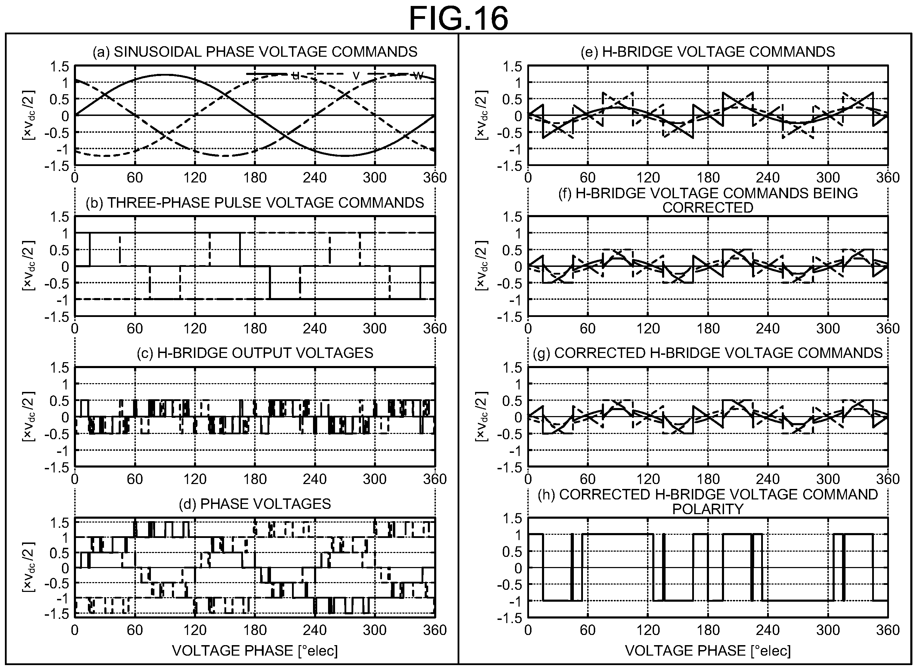

Next, FIG. 16 illustrates operation waveforms in a case where the first common voltage superimposer 903A is additionally provided. That is, FIG. 16 is a diagram illustrating the operation waveforms in the case of absence of the second common voltage superimposer 904A in the configuration of the first embodiment. Note that the modulation factor "m" is the same as that in FIG. 15 and is m=1.23.

In FIG. 16, since the "corrected H-bridge voltage commands" do not exceed the maximum value and the minimum value that can be outputted, the "phase voltages" having less harmonic components are obtained. However, the number of changes in polarity of the "corrected H-bridge voltage commands" is increased to 18 times in the fundamental wave period of the "sinusoidal phase voltage commands".

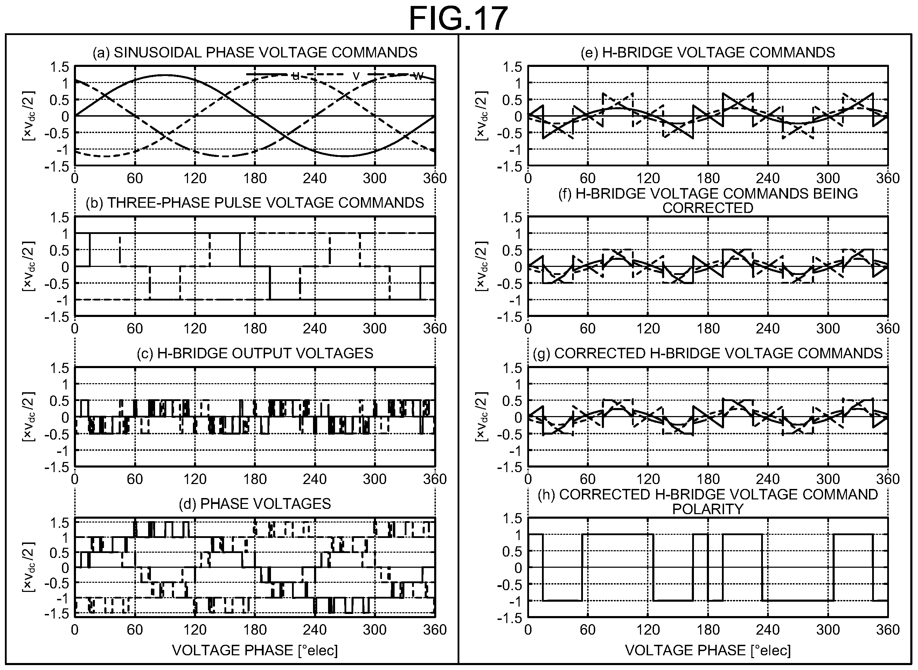

Next, FIG. 17 illustrates operation waveforms in a case where the second common voltage superimposer 904A is further added. That is, FIG. 17 is a diagram illustrating operation waveforms of the configuration of FIG. 2 in the first embodiment. Note that the modulation factor "m" is the same as that in FIGS. 15 and 16 and is m=1.23.

As can be understood from the flowchart of FIG. 5, the operation in the case of the modulation factor being m=1.23 is the same as that in the case of the modulation factor being m=0.70. During the period in which the three-phase sum of the "three-phase pulse voltage commands" by the second common voltage superimposer 904A is not zero, the positive/negative polarity of the "corrected H-bridge voltage commands" is not switched. Furthermore, the positive/negative polarity of the "corrected H-bridge voltage commands" does not change from that of the "H-bridge voltage commands" before the correction. As a result, as in the case of FIG. 15, the number of changes in polarity of the "corrected H-bridge voltage commands" is reduced to ten times in the fundamental wave period of the "sinusoidal phase voltage commands". That is, since the number of switching operations of the first legs of the H-bridge circuits 5, 6, and 7 is reduced, the switching loss is reduced accordingly. Therefore, it is possible to reduce the switching loss of the first legs of the H-bridge circuits 5, 6, and 7 while reducing the distortion of the "phase voltages" by preventing a voltage of a portion exceeding the maximum value and the minimum value that can be outputted by the "H-bridge voltage commands" from being outputted.

As described above, in the power converter according to the first embodiment, the power conversion controller calculates the first three-phase common voltage common to the three phases, and generates the second phase voltage commands obtained by superimposing the calculated first three-phase common voltage on the first phase voltage commands. Moreover, the power conversion controller calculates the second three-phase common voltage common to the three phases, and generates the third phase voltage commands obtained by superimposing the calculated second three-phase common voltage on the second phase voltage commands. The power conversion controller generates the second gate signals to be applied to one leg of the first and second legs on the basis of the positive/negative polarity of the third phase voltage commands, and at the same time generates the second gate signals to be applied to another leg of the first and second legs on the basis of the third phase voltage commands. During the period in which the three-phase sum of the three-phase pulse voltage commands is not zero, the power conversion controller calculates the second three-phase common voltage so that the positive/negative polarity of the third phase voltage commands is not switched. As a result, the number of switching operations of the switching elements in one of the first and second legs is reduced, thereby making it possible to reduce the switching loss of the one leg. Therefore, the power converter can be efficiently controlled while reducing noise and harmonics.

Note that in the power converter according to the first embodiment, the capacitor voltage that is a voltage across the capacitor is preferably half or less of a half of the step width of the phase voltages of the inverter circuit, that is, a quarter or less of the voltage of the direct current power supply. Such setting can reduce harmonics and obtain the output voltage closer to a sine wave.

Moreover, in the power converter according to the first embodiment, the power conversion controller calculates the first three-phase common voltage so that the absolute value of the voltage value of each phase in the second phase voltage commands does not exceed the capacitor voltage. This restrains output of a voltage of a portion exceeding the maximum value and the minimum value that can be outputted by the first phase voltage commands, so that distortion of the phase voltages can be reduced.

Moreover, in the power converter according to the first embodiment, in the case where the modulation factor "m" is 0.61 or more and 0.79 or less, in the case where it is 0.90 or more and 0.99 or less, or in the case where it is 1.23 or more, the power conversion controller calculates the second three-phase common voltage so that the maximum value for three phases of the second phase voltage commands is zero or negative when the three-phase sum of the three-phase pulse voltage commands is positive. Also, the power conversion controller calculates the second three-phase common voltage so that the minimum value for three phases of the second phase voltage commands is zero or positive when the three-phase sum of the three-phase pulse voltage commands is negative. This makes the number of switching operations of the first leg of the single-phase bridge circuit smaller, so that the switching loss of the single-phase bridge circuit can be reduced.

Note that in the configuration of the power converter according to the first embodiment, a semiconductor switching element formed of a narrow band gap semiconductor can be used for the inverter circuit, and a semiconductor switching element formed of a wide band gap semiconductor can be used for the single-phase bridge circuit. With such a configuration, the switching loss of one leg of the first and second legs can be reduced, and the cost of the other leg of the first and second legs can be reduced. As a result, an increase in manufacturing cost of the power converter can be prevented while improving the efficiency of the operation of the power converter. Moreover, the problems on both the manufacturing cost and the difficulty of obtaining the element can be achieved.

Moreover, in the above-described configuration, of the first leg and the second leg constituting the single-phase bridge circuit, the leg controlled by the second gate signal generated on the basis of the positive/negative polarity of the third phase voltage commands may be configured to use a semiconductor switching element formed of a narrow bandgap semiconductor. With such a configuration, the cost in configuring the power converter can be further reduced.

Note that the capacitor voltage of the single-phase bridge circuit is preferably half or less of the step width of the phase voltages of the inverter circuit. Such setting can obtain the output voltage closer to a sine wave while reducing harmonics. Moreover, lowering the capacitor voltage of the single-phase bridge circuit can obtain an advantageously effect of reducing the switching loss in the single-phase bridge circuit.

Second Embodiment.

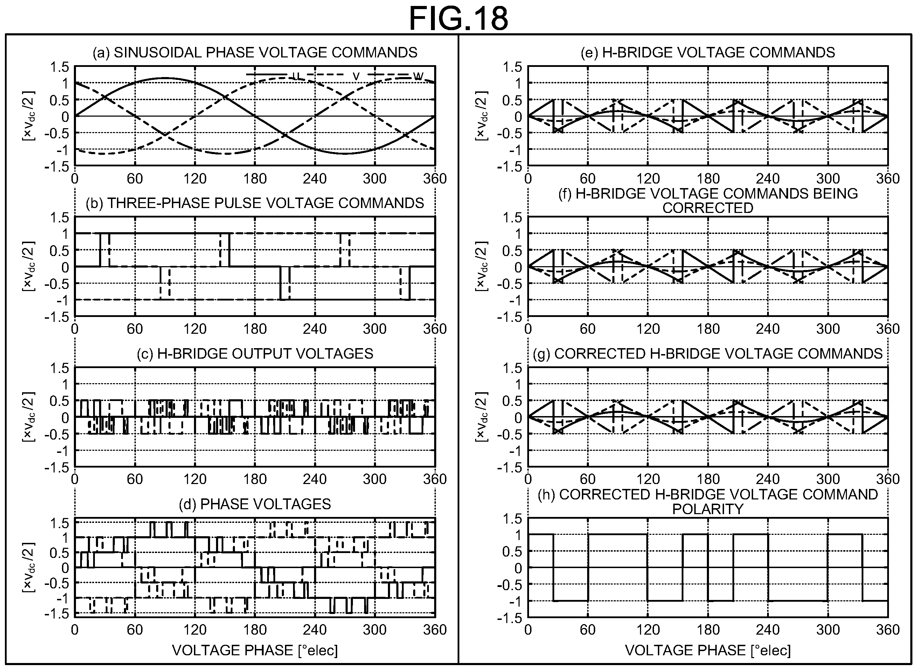

In a general inverter circuit, a rated voltage is often set to a value at which the amplitude of the voltage between output lines is equal to the direct current voltage. The modulation factor "m" at this time is m=1.15. FIG. 18 illustrates operation waveforms in this condition in a case where both the first common voltage superimposer 903A and the second common voltage superimposer 904A are absent. That is, FIG. 18 is a diagram illustrating the operation waveforms in the case of absence of both the first common voltage superimposer 903A and the second common voltage superimposer 904A in the configuration of the first embodiment.

Referring to the waveform of the "corrected H-bridge voltage command polarity" in FIG. 18, the polarity of the "corrected H-bridge voltage commands" changes ten times in the fundamental wave period of the "sinusoidal phase voltage commands", and thus the first legs of the H-bridge circuits 5, 6, and 7 are switched ten times. Here, when the motor 2 that is a load is driven, the magnitude of the "sinusoidal phase voltage commands" for the driving, that is, the magnitude of the modulation factor "m", is considered to be proportional to the rotational speed of the motor 2. Accordingly, in a case where the modulation factor "m" is less than 1.15, the rotational speed of the motor 2, that is, the fundamental frequency of the "sinusoidal phase voltage commands", is low. Therefore, in the case where the modulation factor "m" is less than 1.15, it can be said that the first legs of the H-bridge circuits 5, 6, and 7 may be switched ten times in the fundamental wave period.

On the other hand, in the case of the operation with the operation waveforms of FIG. 14, that is, the configuration of the first embodiment with the modulation factor being m=0.95, the number of switching operations of the first legs of the H-bridge circuits 5, 6, and 7 is six times, which is less than ten times that is the allowable number of switching operations. At this time, referring to the waveform of the "corrected H-bridge voltage commands" in (g) of FIG. 14, although small, there is some overmodulation component exceeding the maximum value and the minimum value that can be outputted, which distorts the output voltage. In this situation, a second embodiment discloses a power converter that can obtain the output voltage with smaller distortion by fully exploiting the allowable number of switching operations.

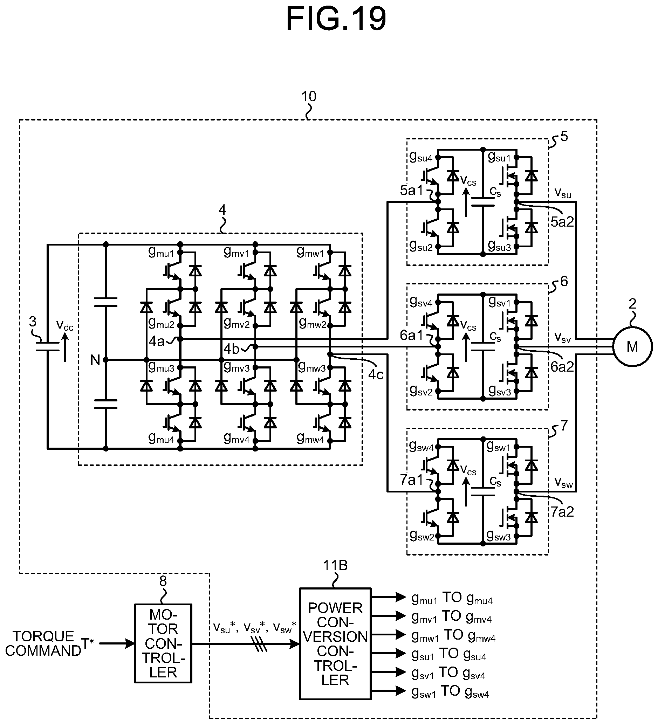

FIG. 19 is a circuit diagram illustrating a configuration of a power converter 10 according to the second embodiment. In FIG. 19, the power converter 10 according to the second embodiment has a configuration in which the power conversion controller 9A is replaced with a power conversion controller 11B in the configuration of the power converter 1 according to the first embodiment illustrated in FIG. 1. Note that the other components are identical or equivalent to those of the first embodiment, and the same components are denoted by the same reference signs as those in the first embodiment to omit their redundant description.

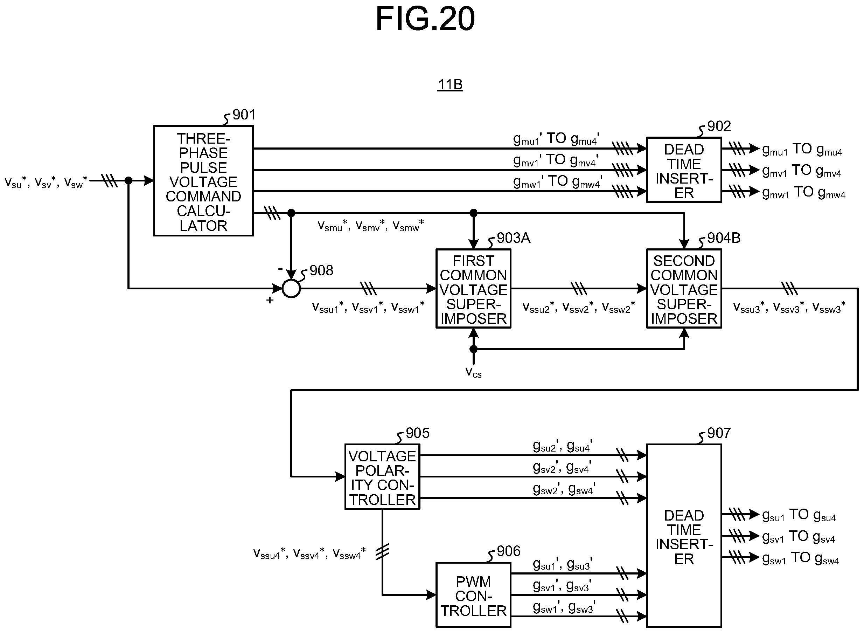

FIG. 20 is a block diagram illustrating a configuration of the power conversion controller 11B in the second embodiment. In FIG. 20, the power conversion controller 11B of the second embodiment has a configuration in which the second common voltage superimposer 904A is replaced with a second common voltage superimposer 904B in the configuration of the power conversion controller 9A of the first embodiment illustrated in FIG. 2. The other components are identical or equivalent to those of the first embodiment, and the same components are denoted by the same reference signs as those in the first embodiment to omit their redundant description.

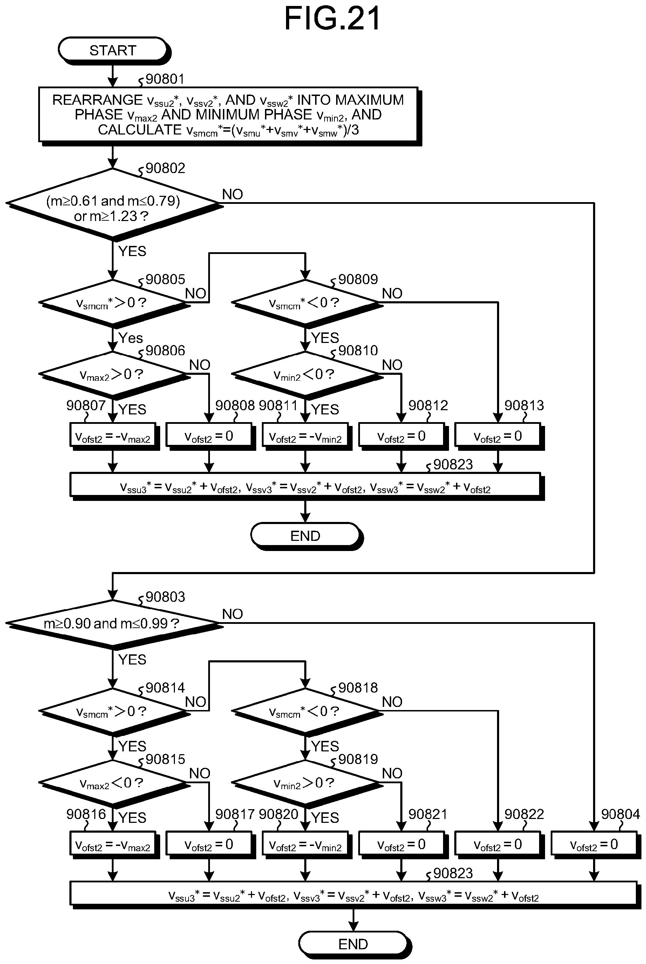

FIG. 21 is a flowchart used to describe the operation of the second common voltage superimposer 904B in the second embodiment. In FIG. 21, the processing for the case of whether or not the modulation factor "m" is 0.61 or more and 0.79 or less or whether or not it is 1.23 or more is the same as that in the flowchart illustrated in FIG. 5, and so its redundant description will be omitted. Note that step 90802, steps 90805 to 90813, and step 90823 in FIG. 21 correspond to step 90402, steps 90404 to 90412, and step 90413 in FIG. 5, respectively.

Next, processing different from that of FIG. 5 will be described. In step 90802, if the modulation factor "m" is not 0.61 or more and 0.79 or less and not 1.23 or more (No in step 90802), that is, if the modulation factor "m" is less than 0.61 or is more than 0.79 and less than 1.23, the second common voltage superimposer 904B proceeds to step 90803. In step 90803, it is determined whether or not the modulation factor "m" is 0.90 or more and 0.99 or less. If this condition is not satisfied (No in step 90803), the second three-phase common voltage is set as $v_{ofst2}$=0 (step 90804). On the other hand, if the condition in step 90803 is satisfied (Yes in step 90803), the second common voltage superimposer 904B determines whether the common mode voltage $v_{smcm}^*$ is positive (step 90814), or whether it is negative or zero (step 90818). If the common mode voltage $v_{smcm}^*$ is zero (No in step 90814 and No in step 90818), the second common voltage superimposer 904B sets the second three-phase common voltage as $v_{ofst2}$=0 (step 90822).

If the common mode voltage $v_{smcm}^*$ of the three-phase pulse voltage commands $v_{smu}^*$, $v_{smv}^*$, and $v_{smw}^*$ is positive (Yes in step 90814), it is determined whether or not the maximum phase $v_{max2}$ is less than zero (step 90815). If the maximum phase $v_{max2}$ is less than zero (Yes in step 90815), the second three-phase common voltage is set as $v_{ofst2}$=-$v_{max2}$ (step 90816), or if the maximum phase $v_{max2}$ is zero or more (No in step 90815), the second three-phase common voltage is set as $v_{ofst2}$=0 (step 90817). As a result, the maximum phase $v_{max2}$ is controlled to be zero or positive.

If the common mode voltage $v_{smcm}^*$ of the three-phase pulse voltage commands $v_{smu}^*$, $v_{smv}^*$, and $v_{smw}^*$ is negative (Yes in step 90818), it is determined whether or not the minimum phase $v_{min2}$ exceeds zero (step 90819). If the minimum phase $v_{min2}$ exceeds zero (Yes in step 90819), the second three-phase common voltage is set as $v_{ofst2}$=-

$v_{min2}$ (step 90820), or if the minimum phase $v_{min2}$ does not exceed zero (No in step 90819), the second three-phase common voltage is set as $v_{ofst2}=0$ (step 90821). As a result, the minimum phase $v_{min2}$ is controlled to be zero or negative.

Finally, the second common voltage superimposer 904B superimposes the second three-phase common voltage $v_{ofst2}$ on the second phase voltage commands $v_{ssu2}{}^*$, $v_{ssv2}{}^*$, and $v_{ssw2}{}^*$ to generate the third phase voltage commands $v_{ssu3}{}^*$, $v_{ssv3}{}^*$, and $v_{ssw3}{}^*$ (step 90823).

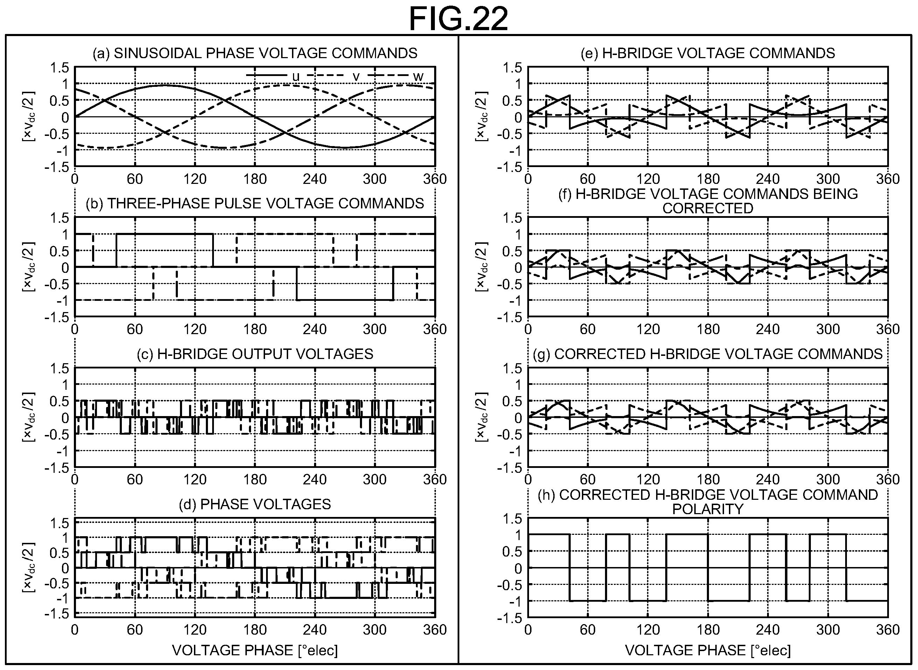

FIG. 22 illustrates operation waveforms of the second embodiment in the case of the modulation factor being m=0.95. That is, FIG. 22 is a diagram illustrating operation waveforms of the configuration of FIG. 20 in the second embodiment.

FIG. 22 shows an example when the modulation factor is m=0.95. To this end, when the three-phase sum of the "three-phase pulse voltage commands" is positive, the second three-phase common voltage is calculated so that the maximum value for three phases of the "H-bridge voltage commands being corrected" is zero or positive. On the other hand, when the three-phase sum of the "three-phase pulse voltage commands" is negative, the second three-phase common voltage is calculated so that the minimum value for three phases of the "H-bridge voltage commands being corrected" is zero or negative. As a result, the positive/negative polarity of the "corrected H-bridge voltage commands" is not switched during the period in which the three-phase sum of the "three-phase pulse voltage commands" is not zero.

Here, in the second embodiment, the "corrected H-bridge voltage commands" allow a change in the positive/negative polarity from that of the "H-bridge voltage commands" before the correction. As a result, the number of changes in polarity of the "corrected H-bridge voltage commands" is ten times in the fundamental wave period of the "sinusoidal phase voltage commands". Although this shows an increase from six times in FIG. 14 that is the result of the first embodiment, ten times is the same as in a case where the power converter 10 is operated at the modulation factor of 1.15 that is a condition around the rated voltage. Meanwhile, in the result of the first embodiment, the "corrected H-bridge voltage commands" have some overmodulation component exceeding the maximum value $v_{cs}$ (=$v_{dc}/4$) and the minimum value -$v_{cs}$ that can be outputted, but the second embodiment successfully removes this overmodulation component. As a result, the second embodiment can obtain the output voltage with less distortion as compared with the first embodiment. Therefore, the second embodiment can obtain the output voltage with smaller distortion by fully exploiting the allowable number of switching operations determined by a rated operation or the like.

As described above, in the power converter according to the second embodiment, in the case where the modulation factor is 0.90 or more and 0.99 or less, the power conversion controller calculates the second three-phase common voltage so that the maximum value for three phases of the second phase voltage commands is zero or positive when the three-phase sum of the three-phase pulse voltage commands is positive. On the other hand, the power conversion controller calculates the second three-phase common voltage so that the minimum value for three phases of the second phase voltage commands is zero or negative when the three-phase sum of the three-phase pulse voltage commands is negative. This enables control that fully exploits the allowable number of switching operations, so that noise and harmonics can be reduced while reducing the switching loss of the single-phase bridge circuit. As a result, an unprecedented and remarkable effect is obtained in which voltage with significantly small distortion can be applied to the load.

Third Embodiment.

The first common voltage superimposer 903A of the first and second embodiments calculates the first three-phase common voltage so that the peak values of the second phase voltage commands $v_{ssu2}{}^*$, $v_{ssv2}{}^*$, and $v_{ssw2}{}^*$ can be reduced. That is, the first three-phase common voltage is calculated so as not to exceed the maximum value $v_{cs}$ and the minimum value -$v_{cs}$ that can be outputted by the first phase voltage commands $v_{ssu1}{}^*$, $v_{ssv1}{}^*$, and $v_{ssw1}{}^*$. However, there is room for improvement in the control in the first embodiment and the second embodiment. If the peak values can be further reduced, the switching loss of the H-bridge circuits 5, 6, and 7 can be further reduced. Therefore, a third embodiment discloses a power converter that is configured to further reduce the peak values of the second phase voltage commands $v_{ssu2}{}^*$, $v_{ssv2}{}^*$, and $v_{ssw2}{}^*$ to further reduce the switching loss of the H-bridge circuits 5, 6, and 7.

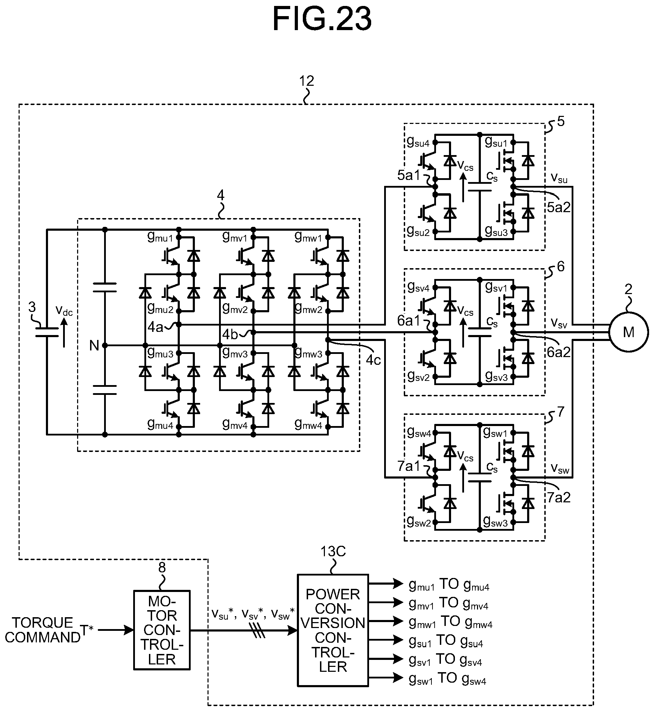

FIG. 23 is a circuit diagram illustrating a configuration of a power converter 12 according to the third embodiment. In FIG. 23, the power converter 12 according to the third embodiment has a configuration in which the power conversion controller 9A is replaced with a power conversion controller 13C in the configuration of the power converter 1 according to the first embodiment illustrated in FIG. 1. In the power converter 1 according to the first embodiment, the capacitor voltage $v_{cs}$ of the H-bridge circuits 5, 6, and 7 is set to about half of a half of the direct current voltage $v_{dc}$ (i.e., $v_{cs}=v_{dc}/4$). In contrast to this, in the power converter 12 according to the third embodiment, the capacitor voltage $v_{cs}$ of the H-bridge circuits 5, 6, and 7 is lowered to 0.45 times the half of the direct current voltage $v_{dc}$ (i.e., $v_{cs}=0.45 \times v_{dc}/4$). The other components are identical or equivalent to those of the first embodiment, and the same components are denoted by the same reference signs as those in the first embodiment to omit their redundant description.

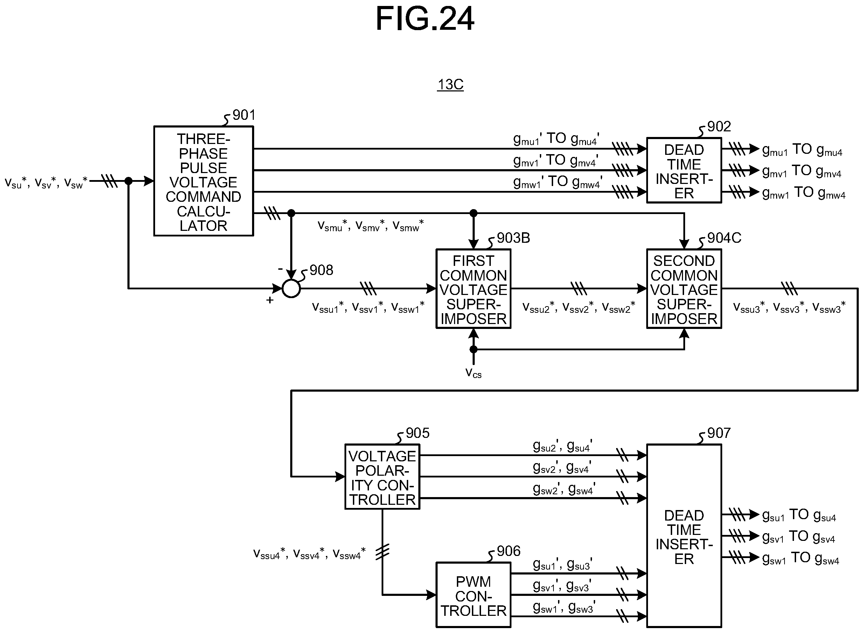

FIG. 24 is a block diagram illustrating a configuration of the power conversion controller 13C in the third embodiment. In FIG. 24, the power conversion controller 13C of the third embodiment has a configuration in which the first common voltage superimposer 903A and the second common voltage superimposer 904A are replaced with a first common voltage superimposer 903B and a second common voltage superimposer 904C, respectively, in the configuration of the power conversion controller 9A of the first embodiment illustrated in FIG. 2. The other components are identical or equivalent to those of the first embodiment, and the same components are denoted by the same reference signs as those in the first embodiment to omit their redundant description.

The first common voltage superimposer 903B calculates the first three-phase common voltage so that the peak values of the second phase voltage commands $v_{ssu2}{}^*$, $v_{ssv2}{}^*$, and $v_{ssw2}{}^*$ can be reduced. The first common voltage superimposer 903B superimposes the calculated first three-phase common voltage on the first phase voltage commands $v_{ssu1}{}^*$, $v_{ssv1}{}^*$, and $v_{ssw1}{}^*$, and outputs the voltages obtained by the superimposition process to the second common voltage superimposer 904C as the second phase voltage commands $v_{ssu2}{}^*$, $v_{ssv2}{}^*$, and $v_{ssw2}{}^*$.

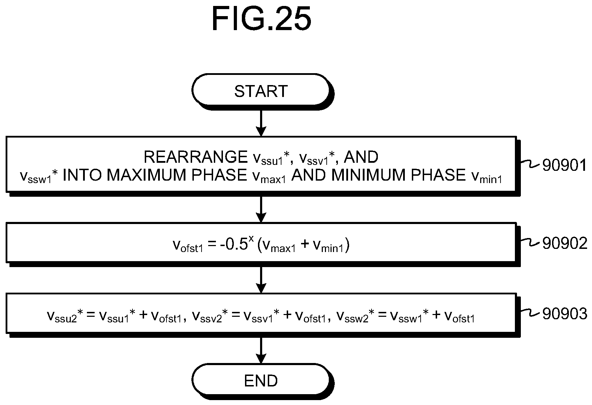

FIG. 25 is a flowchart used to describe the operation of the first common voltage superimposer 903B in the third embodiment.

In FIG. 25, the first common voltage superimposer 903B rearranges the first phase voltage commands $v_{ssu1}{}^*$, $v_{ssv1}{}^*$, and $v_{ssw1}{}^*$ into the maximum phase $v_{max1}$ and the minimum phase $v_{min1}$ (step 90901). Next, the first common voltage superimposer 903B uses the following expression (4) to calculate the first three-phase common voltage $v_{ofst1}$ as a value obtained by inverting the polarity of an average value of the maximum phase $v_{max1}$ and the minimum phase $v_{min1}$ (step 90902).

$$v_{ofst1} = -0.5 \times (v_{max1} + v_{min1}) \quad \ldots (4)$$

Finally, the first common voltage superimposer 903B superimposes the first three-phase common voltage $v_{ofst1}$ on the first phase voltage commands $v_{ssu1}{}^*$, $v_{ssv1}{}^*$, and $v_{ssw1}{}^*$, and generates the second phase voltage commands $v_{ssu2}{}^*$, $v_{ssv2}{}^*$, and $v_{ssw2}{}^*$ (step 90903).

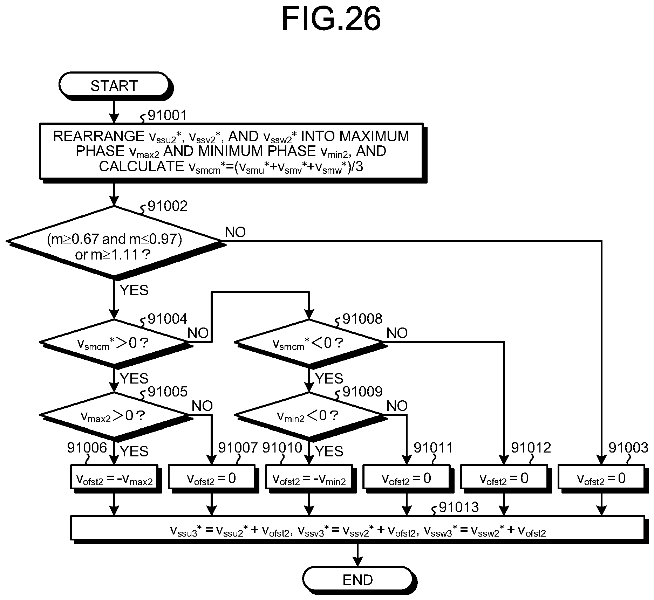

Next, the operation of the second common voltage superimposer 904C will be described. FIG. 26 is a flowchart used to describe the operation of the second common voltage superimposer 904C in the third embodiment.

In FIG. 26, the second common voltage superimposer 904C rearranges the second phase voltage commands $v_{ssu2}{}^*$, $v_{ssv2}{}^*$, and $v_{ssw2}{}^*$ into the maximum phase $v_{max2}$ and the minimum phase $v_{min2}$, and calculates the common mode voltage $v_{smcm}{}^*$ of the three-phase pulse voltage commands $v_{smu}{}^*$, $v_{smv}{}^*$, and $v_{smw}{}^*$ using the above expression (2) (step 91001).

The second common voltage superimposer 904C determines whether or not the modulation factor "m" is 0.67 or more and 0.97 or less, or whether or not it is 1.11 or more (step 91002). If none of these conditions is satisfied (No in step 91002), the second three-phase common voltage is set as $v_{ofst2}=0$ (step 91003). On the other hand, if any one of the conditions is satisfied (Yes in step 91002), the second common voltage superimposer 904C determines whether the common mode voltage $v_{smcm}{}^*$ is positive (step 91004), or whether it is negative or zero (step 91008). If the common mode voltage $v_{smcm}{}^*$ is zero (No in step 91004 and No in step 91008), the second common voltage superimposer 904C sets the second three-phase common voltage as $v_{ofst2}=0$ (step 91012).

If the common mode voltage $v_{smcm}{}^*$ of the three-phase pulse voltage commands $v_{smu}{}^*$, $v_{smv}{}^*$, and $v_{smw}{}^*$ is positive (Yes in step 91004), it is determined whether or not the maximum phase $v_{max2}$ exceeds zero (step 91005). If the maximum phase $v_{max2}$ exceeds zero (Yes in step 91005), the second three-phase common voltage is set as $v_{ofst2}=-v_{max2}$ (step 91006), but otherwise if the maximum phase $v_{max2}$ does not exceed zero (No in step 91005), the second three-phase common voltage is set as $v_{ofst2}=0$ (step 91007). As a result, the maximum phase $v_{max2}$ is controlled to be zero or negative.

If the common mode voltage $v_{smcm}{}^*$ of the three-phase pulse voltage commands $v_{smu}{}^*$, $v_{smv}{}^*$, and $v_{smw}{}^*$ is negative (Yes in step 91008), it is determined whether or not the minimum phase $v_{min2}$ is less than zero (step 91009). If the minimum phase $v_{min2}$ is less than zero (Yes in step 91009), the second three-phase common voltage is set as $v_{ofst2}=-v_{min2}$ (step 91010), but otherwise if the minimum phase $v_{min2}$ is zero or more (No in step 91009), the second three-phase common voltage is set as $v_{ofst2}=0$ (step 91011). As a result, the minimum phase $v_{min2}$ is controlled to be zero or positive.

Finally, the second common voltage superimposer 904C superimposes the second three-phase common voltage $v_{ofst2}$ on the second phase voltage commands $v_{ssu2}{}^*$, $v_{ssv2}{}^*$, and $v_{ssw2}{}^*$ to generate the third phase voltage commands $v_{ssu3}{}^*$, $v_{ssv3}{}^*$, and $v_{ssw3}{}^*$ (step 91013).

By the above processing, in a period in which the common mode voltage $v_{smcm}{}^*$ of the three-phase pulse voltage commands $v_{smu}{}^*$, $v_{smv}{}^*$, and $v_{smw}{}^*$, that is, a three-phase sum of the three-phase pulse voltage commands $v_{smu}{}^*$, $v_{smv}{}^*$, and $v_{smw}{}^*$ is not zero, the positive/negative polarity of the third phase voltage commands $v_{ssu3}{}^*$, $v_{ssv3}{}^*$, and $v_{ssw3}{}^*$ is not switched. Furthermore, the positive/negative polarity of the third phase voltage commands $v_{ssu3}{}^*$, $v_{ssv3}{}^*$,

and $v_{ssw3}*$ does not change from that of the first phase voltage commands $v_{ssu1}*$, $v_{ssv1}*$, and $v_{ssw1}*$ that are voltage commands before the correction. This can reduce the number of switching operations in the H-bridge circuits 5, 6, and 7, so that the switching loss in the power converter 12 can be reduced.

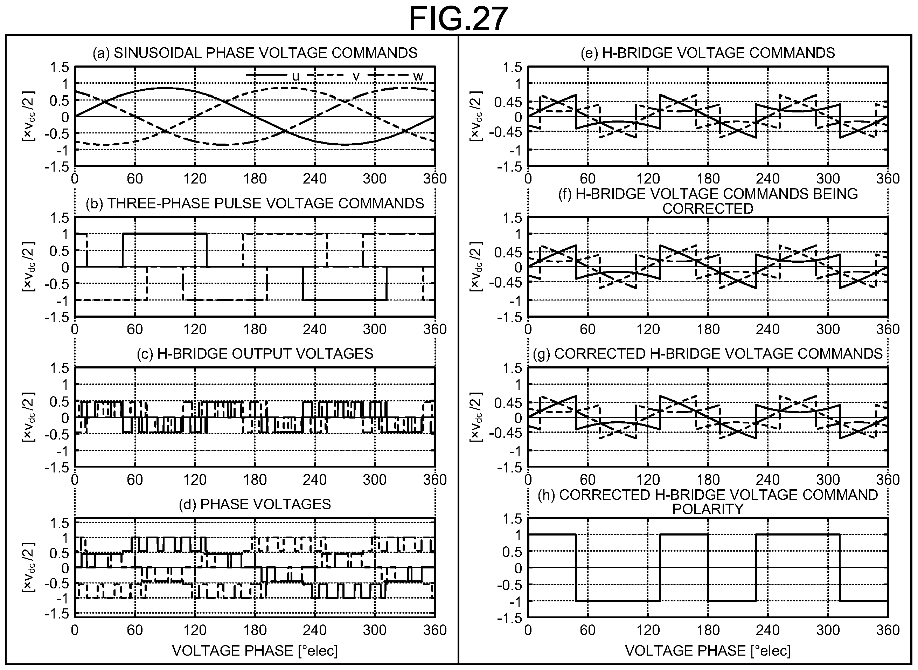

Next, main points of the operation of the power converter 12 according to the third embodiment will be described. FIG. 27 is a diagram illustrating operation waveforms in the case of absence of both the first common voltage superimposer 903B and the second common voltage superimposer 904C in the configuration of the third embodiment. The modulation factor "m" is 0.85.

In the example of FIG. 27, since both the first common voltage superimposer 903B and the second common voltage superimposer 904C are absent, the "H-bridge voltage commands" directly serve as the "corrected H-bridge voltage commands". Referring now to the waveform of the "corrected H-bridge voltage command polarity" in FIG. 27, the polarity of the "corrected H-bridge voltage commands" changes six times in the fundamental wave period of the "sinusoidal phase voltage commands". That is, the first legs of the H-bridge circuits 5, 6, and 7 are switched six times.

In addition, in a case where the first common voltage superimposer 903B is absent, the "H-bridge voltage commands" exceed the maximum value $v_{cs}$ (=0.45×$v_{dc}$/2) and the minimum value -$v_{cs}$ that can be outputted. For this reason, distortion occurs in the "phase voltages" outputted by the power converter 12.

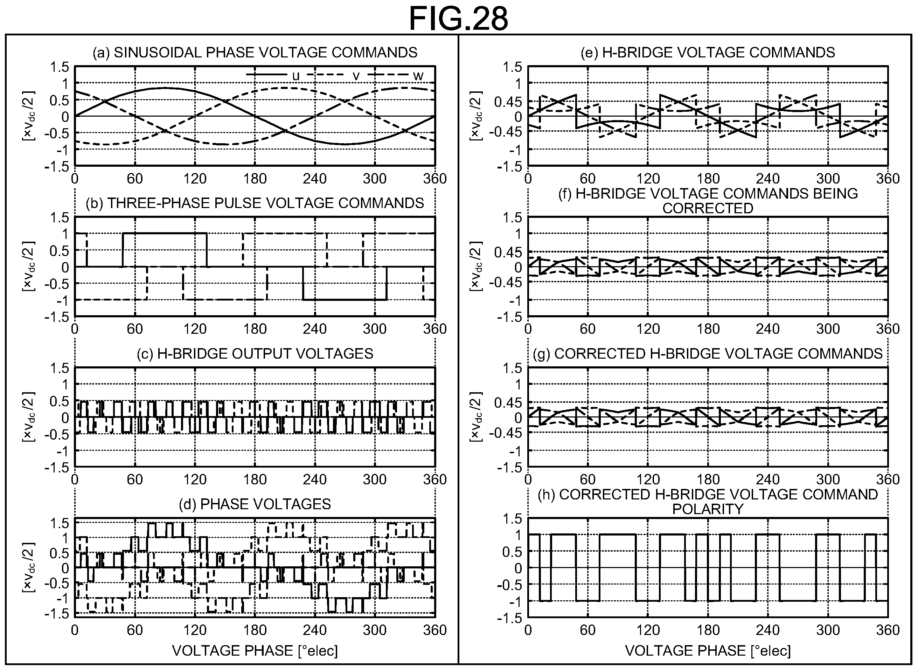

Next, FIG. 28 illustrates operation waveforms in a case where the first common voltage superimposer 903B is additionally provided. That is, FIG. 28 is a diagram illustrating the operation waveforms in the case of absence of the second common voltage superimposer 904C in the configuration of the third embodiment. Note that the modulation factor "m" is the same as that in FIG. 27 and is m=0.85.

In FIG. 28, by the first common voltage superimposer 903B, the first three-phase common voltage is calculated so that the peak values of the "H-bridge voltage commands" are reduced, and is superimposed on the "H-bridge voltage commands". In the example of FIG. 28, since the second common voltage superimposer 904C is absent, the "H-bridge voltage commands being corrected" directly serve as the "corrected H-bridge voltage commands". Since the peak values of the "corrected H-bridge voltage commands" are reduced, the capacitor voltage of the H-bridge circuits 5, 6, and 7 is lowered to successfully reduce the switching loss.

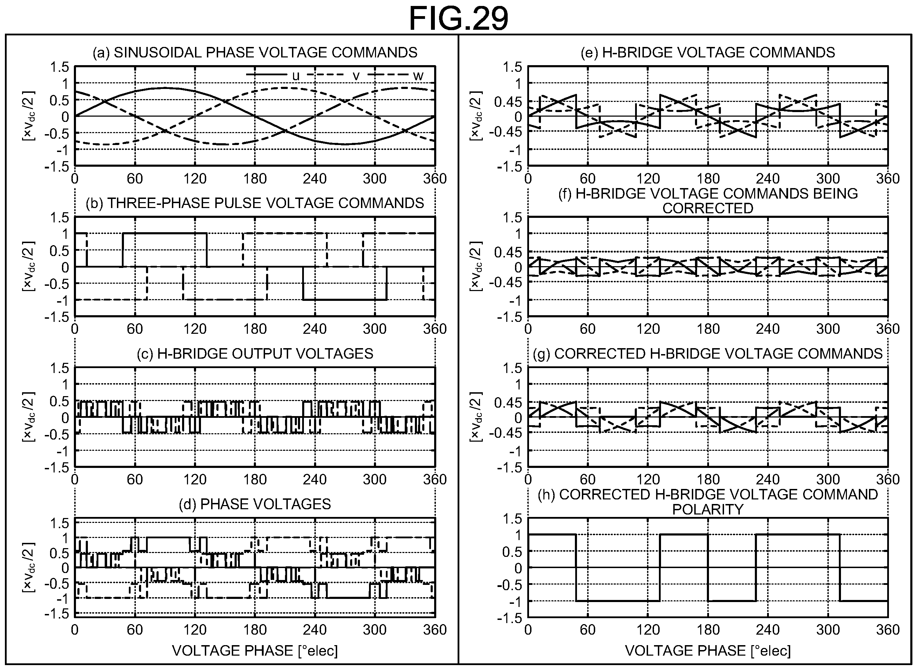

However, referring to the waveform of the "corrected H-bridge voltage command polarity" in FIG. 28, the number of changes in polarity of the "corrected H-bridge voltage commands" is increased to 18 times in the fundamental wave period of the "sinusoidal phase voltage commands". As a result, a problem is cuased in that the number of switching operations of the first legs of the H-bridge circuits 5, 6, and 7 is increased, and the switching loss is increased. This problem is solved by the second common voltage superimposer 904C. FIG. 29 illustrates operation waveforms in a case where the second common voltage superimposer 904C is additionally provided. That is, FIG. 29 is a diagram illustrating operation waveforms of the configuration of FIG. 24 in the third embodiment. Note that the modulation factor "m" is the same as that in FIGS. 27 and 28 and is m=0.85.

During a period in which a three-phase sum of the "three-phase pulse voltage commands" is not zero, the second common voltage superimposer 904C calculates the second three-phase common voltage so that the positive/negative polarity of the "corrected H-bridge voltage commands" is not switched, and superimposes the calculated second three-phase common voltage on the "H-bridge voltage commands being corrected". In the example of FIG. 29, since the modulation factor is 0.85, the second three-phase common voltage is calculated so that the maximum value for three phases of the "H-bridge voltage commands being corrected" is zero or negative when the common mode voltage of the "three-phase pulse voltage commands" is positive. On the other hand, when the common mode voltage of the "three-phase pulse voltage commands" is negative, the second three-phase common voltage is calculated so that the maximum value for three phases of the "H-bridge voltage commands being corrected" is zero or positive. As a result, the positive/negative polarity of the "corrected H-bridge voltage commands" is not switched during the period in which the three-phase sum of the "three-phase pulse voltage commands" is not zero. Furthermore, in the third embodiment, the positive/negative polarity of the "corrected H-bridge voltage commands" does not change from that of the "H-bridge voltage commands" before the correction. As a result, the number of changes in polarity of the "corrected H-bridge voltage commands" is reduced to six times in the fundamental wave period of the "sinusoidal phase voltage commands". That is, since the number of switching operations of the first legs of the H-bridge circuits 5, 6, and 7 is reduced, the switching loss is reduced accordingly. Therefore, the third embodiment reduces the peak values of the "H-bridge voltage commands" to thereby lower the capacitor voltage of the H-bridge circuits 5, 6, and 7 and reduce the switching loss. As a result, the switching loss of the H-bridge circuits 5, 6, and 7 can be further reduced.

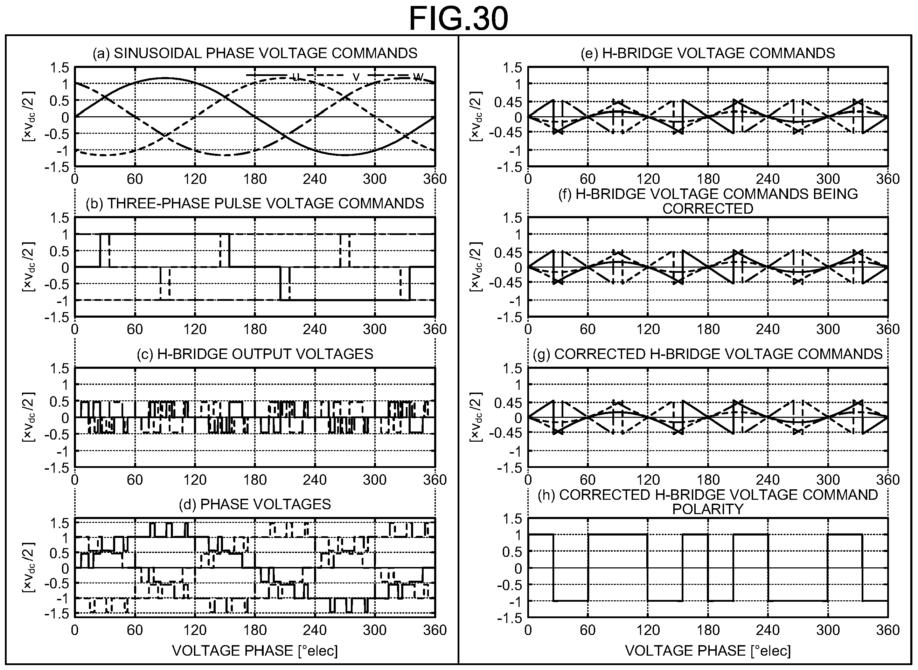

Next, FIG. 30 illustrates operation waveforms in the case of absence of both the first common voltage superimposer 903B and the second common voltage superimposer 904C when the modulation factor "m" is 1.15. That is, FIG. 30 is a diagram illustrating operation waveforms in the case of absence of both the first common voltage superimposer 903B and the second common voltage superimposer 904C in the configuration of the third embodiment.

Referring to the waveform of the "corrected H-bridge voltage command polarity" in FIG. 30, the polarity of the "corrected H-bridge voltage commands" changes ten times in the fundamental wave period of the "sinusoidal phase voltage commands", and thus the first legs of the H-bridge circuits 5, 6, and 7 are switched ten times. In addition, the "H-bridge voltage commands" exceed the maximum value $v_{cs}$ (=$0.45 \times v_{dc}/2$) and the minimum value $-v_{cs}$ that can be outputted. As a result, some distortion occurs in the "phase voltages" outputted by the power converter 12.

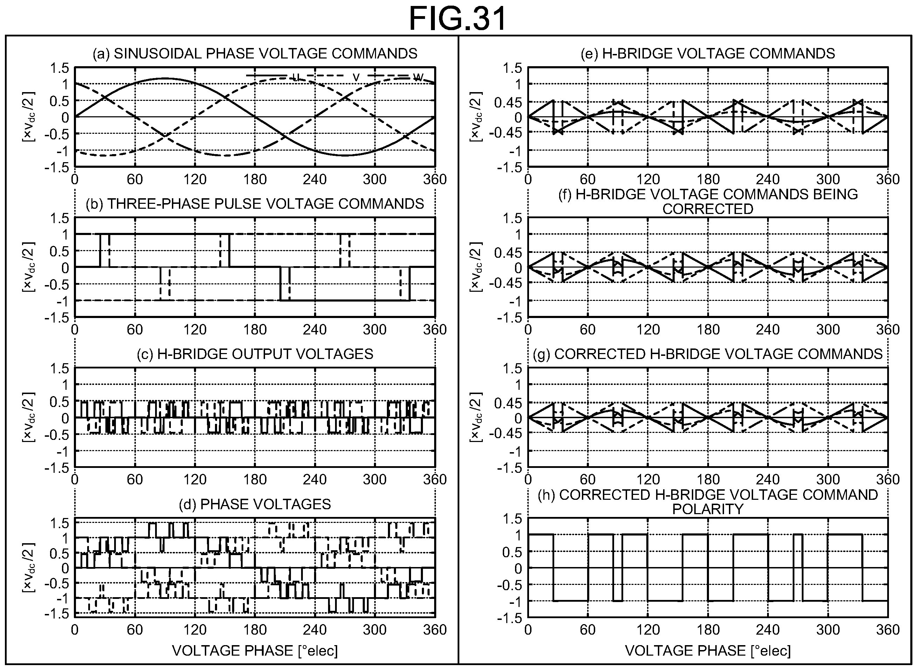

Next, FIG. 31 illustrates operation waveforms in a case where the first common voltage superimposer 903B is additionally provided. That is, FIG. 31 is a diagram illustrating the operation waveforms in the case of absence of the second common voltage superimposer 904C in the configuration of the third embodiment. Note that the modulation factor "m" is the same as that in FIG. 30 and is m=1.15.

In FIG. 31, since the "corrected H-bridge voltage commands" do not exceed the maximum value and the minimum value that can be outputted, the "phase voltages" having less harmonic components are obtained. However, the number of changes in polarity of the "corrected H-bridge voltage commands" is increased to 14 times in the fundamental wave period of the "sinusoidal phase voltage commands".

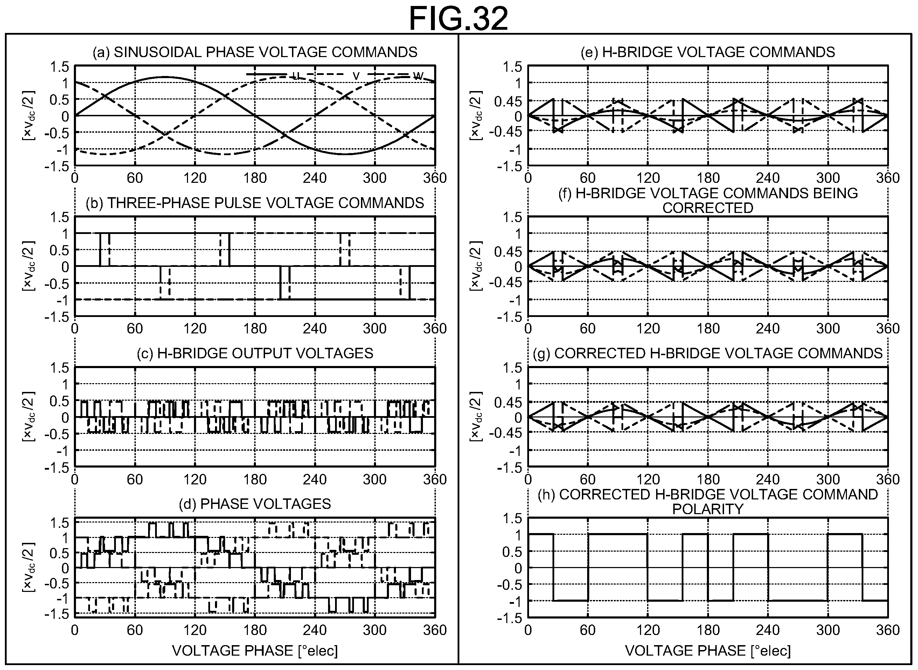

Next, FIG. 32 illustrates operation waveforms in a case where the second common voltage superimposer 904C is further added. That is, FIG. 32 is a diagram illustrating operation waveforms of the configuration of FIG. 24 in the third embodiment. Note that the modulation factor "m" is the same as that in FIGS. 30 and 31 and is m=1.15.

As can be understood from the flowchart of FIG. 26, the operation in the case of the modulation factor being m=1.15 is the same as that in the case of the modulation factor being m=0.85. During the period in which the three-phase sum of the "three-phase pulse voltage commands" by the second common voltage superimposer 904C is not zero, the positive/negative polarity of the "corrected H-bridge voltage commands" is not switched. Furthermore, the positive/negative polarity of the "corrected H-bridge voltage commands" does not change from that of the "H-bridge voltage commands" before the correction. Thus, as in the case of the modulation factor being m=0.85, the number of changes in polarity of the "corrected H-bridge voltage commands" is reduced to ten times in the fundamental wave period of the "sinusoidal phase voltage commands". That is, since the number of switching operations of the first legs of the H-bridge circuits 5, 6, and 7 is reduced, the switching loss is reduced accordingly. Therefore, the third embodiment reduces the peak values of the "H-bridge voltage commands" to thereby lower the capacitor voltage of the H-bridge circuits 5, 6, and 7 and reduce the switching loss. As a result, the switching loss of the H-bridge circuits 5, 6, and 7 can be further reduced.

As described above, in the power converter according to the third embodiment, the power conversion controller calculates the second three-phase common voltage so that the positive/negative polarity of the third phase voltage commands does not change from that of the first phase voltage commands. As a result, compared to the first embodiment and the second embodiment, the switching loss can be further reduced, thereby leading to an unprecedented and remarkable effect that a more efficient power converter can be configured.

Moreover, in the power converter according to the third embodiment, the power conversion controller generates, as the first three-phase common voltage, the value obtained by inverting the polarity of the average value of the maximum value and the minimum value of the first phase voltage commands. As a result, the peak value of the first phase voltage command can be reduced, so that the power converter can be efficiently controlled while reducing the possible distortion of the phase voltage outputted therefrom.

Moreover, in the power converter according to the third embodiment, in the case where the modulation factor "m" is 0.67 or more and 0.97 or less, or in the case where it is 1.11 or more, the power conversion controller calculates the second three-phase common voltage so that the maximum value of the second phase voltage commands is zero or negative when the three-phase sum of the three-phase pulse voltage commands is positive. On the other hand, the power conversion controller calculates the second three-phase common voltage so that the minimum value of the second phase voltage commands is zero or positive when the three-phase sum of the three-phase pulse voltage commands is negative. This reduces the number of switching operations of the first leg of the single-phase bridge circuit, and thus can reduce the switching loss of the single-phase bridge circuit.

Fourth Embodiment.

In the third embodiment, in the case of the operation waveforms in FIG. 29, that is, the operation being conducted with the modulation factor being m=0.85, the number of switching operations of the first legs of the H-bridge circuits 5, 6, and 7 is six times. This is less than ten times that is the number of switching operations with the modulation factor being m=1.15 that is a condition according to the rated voltage of a general inverter circuit. On the other hand, referring to the waveforms of the "corrected H-bridge voltage commands" in (g) of FIG. 29, the peak values thereof are considerably higher than those of the "H-bridge voltage commands being corrected". In the circumstances, a fourth embodiment discloses a power converter that fully exploits the allowable number of switching operations to further reduce the peak values of the "corrected H-bridge voltage commands" so as to further reduce the switching loss of the H-bridge circuits 5, 6, and 7.

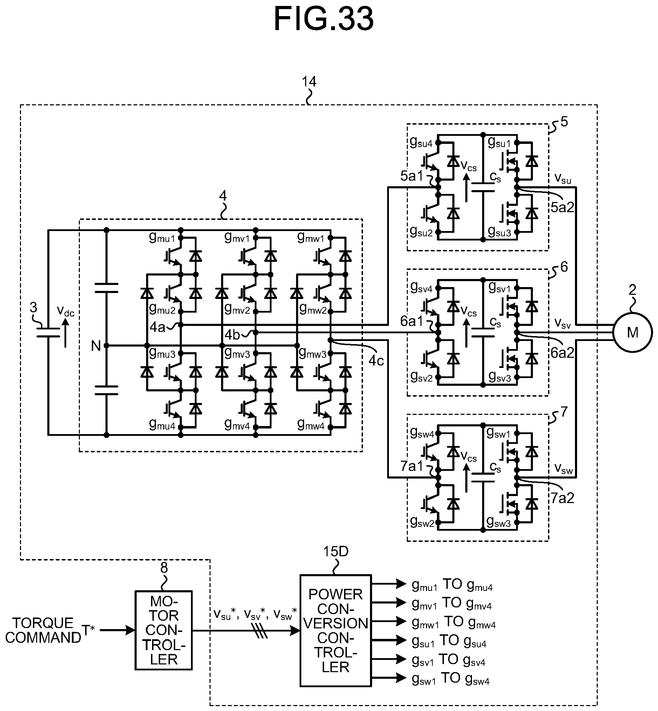

FIG. 33 is a circuit diagram illustrating a configuration of a power converter 14 according to the fourth embodiment. In FIG. 33, the power converter 14 according to the fourth embodiment has a configuration in which the power conversion controller 13C is replaced with a power conversion controller 15D in the configuration of the power converter 12 according to the third embodiment illustrated in FIG. 23. In the power converter 12 according to the third embodiment, the capacitor voltage $v_{cs}$ of the H-bridge circuits 5, 6, and 7 is set to 0.45 times a half of the direct current voltage $v_{dc}$ (i.e., $v_{cs}=0.45 \times v_{dc}/4$). In contrast to this, in the power converter 14 according to the fourth embodiment, the capacitor voltage $v_{cs}$ of the H-bridge circuits 5, 6, and 7 is lowered to 0.40 times a half of the direct current voltage $v_{dc}$ (i.e., $v_{cs}=0.40 \times v_{dc}/4$). The other components are identical or equivalent to those of the first embodiment, and the same components are denoted by the same reference signs as those in the first embodiment to omit their redundant description.

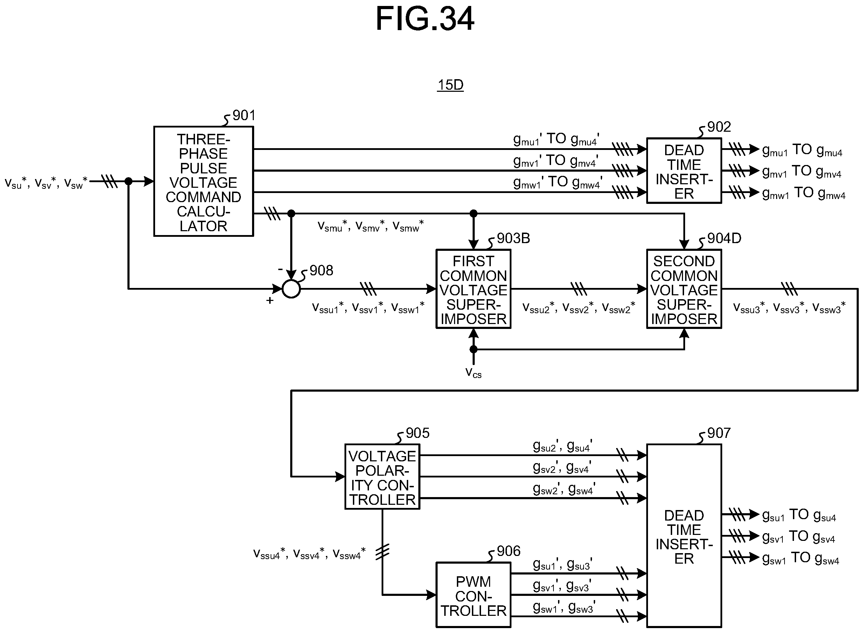

FIG. 34 is a block diagram illustrating a configuration of the power conversion controller 15D in the fourth embodiment. In FIG. 34, the power conversion controller 15D of the fourth embodiment has a configuration in which the second common voltage superimposer 904C is replaced with a second common voltage superimposer 904D in the configuration of the power conversion controller 13C in the third embodiment illustrated in FIG. 24. The other components are identical or equivalent to those of the first embodiment, and the same components are denoted by the same reference signs as those in the first embodiment to omit their redundant description.

In a period in which a three-phase sum of the three-phase pulse voltage commands $v_{smu}^*$, $v_{smv}^*$, and $v_{smw}^*$ is not zero, the second common voltage superimposer 904D calculates the second three-phase common voltage and superimposes the second three-phase common voltage on the second phase voltage commands $v_{ssu2}^*$, $v_{ssv2}^*$, and $v_{ssw2}^*$ so that the positive/negative polarity of the third phase voltage commands $v_{ssu3}^*$, $v_{ssv3}^*$, and $v_{ssw3}^*$ is not switched.

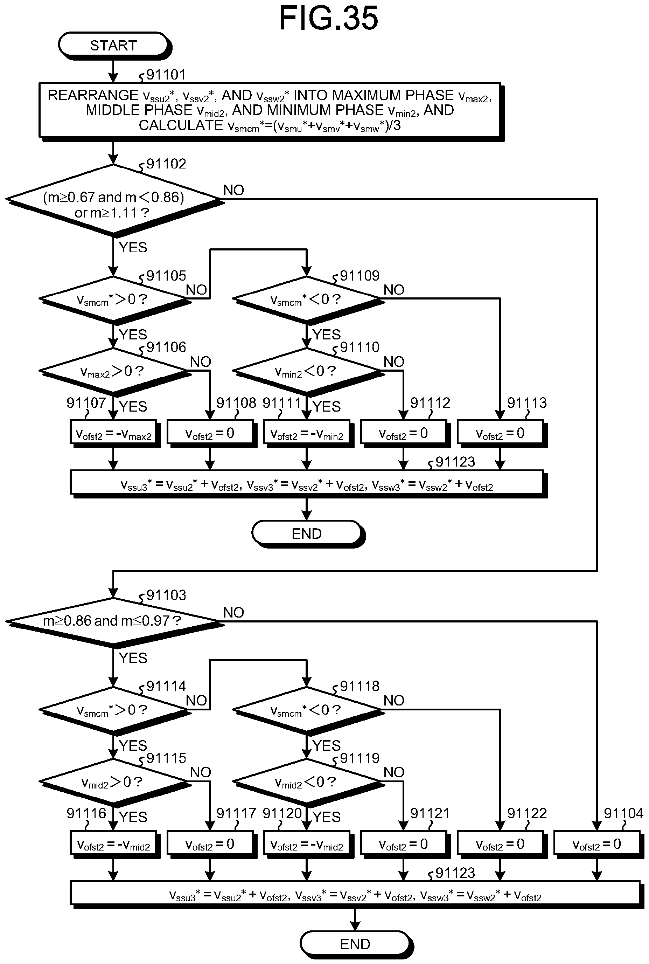

FIG. 35 is a flowchart used to describe the operation of the second common voltage superimposer 904D in the fourth embodiment.

In FIG. 35, the second common voltage superimposer 904D rearranges the second phase voltage commands $v_{ssu2}^*$, $v_{ssv2}^*$, and $v_{ssw2}^*$ into the maximum phase $v_{max2}$, a middle phase $v_{mid2}$, and the minimum phase $v_{min2}$, and calculates the common mode voltage $v_{smcm}^*$ of the three-phase pulse voltage commands $v_{smu}^*$, $v_{smv}^*$, and $v_{smw}^*$ using the above expression (2) (step 91101).

The second common voltage superimposer 904D determines whether or not the modulation factor "m" is 0.67 or more and less than 0.86, or whether or not it is 1.11 or more (step 91102). If none of these conditions is satisfied (No in step 91102), the operation proceeds to step 91103. On the other hand, if any one of the conditions is satisfied (Yes in step 91102), the second common voltage superimposer 904D determines whether the common mode voltage $v_{smcm}^*$ is positive (step 91105), or negative or zero (step 91109). If the common mode voltage $v_{smcm}^*$ is zero (No in step 91105 and No in step 91109), the second common voltage superimposer 904D sets the second three-phase common voltage as $v_{ofst2}=0$ (step 91113) .

If the common mode voltage $v_{smcm}^*$ of the three-phase pulse voltage commands $v_{smu}^*$, $v_{smv}^*$, and $v_{smw}^*$ is positive (Yes in step 91105), it is determined whether or not the maximum phase $v_{max2}$ exceeds zero (step 91106) . If the maximum phase $v_{max2}$ exceeds zero (Yes in step 91106), the second three-phase common voltage is set as $v_{ofst2}=-v_{max2}$ (step 91107), or if the maximum phase $v_{max2}$ does not exceed zero (No in step 91106), the second three-phase common voltage is set as $v_{ofst2}=0$ (step 91108). As a result, the maximum phase $v_{max2}$ is controlled to be zero or negative.

If the common mode voltage $v_{smcm}^*$ of the three-phase pulse voltage commands $v_{smu}^*$, $v_{smv}^*$, and $v_{smw}^*$ is negative (Yes in step 91109), it is determined whether or not the minimum phase $v_{min2}$ is less than zero (step 91110). If the minimum phase $v_{min2}$ is less than zero (Yes in step 91110), the second three-phase common voltage is set as $v_{ofst2}=-v_{min2}$ (step 91111), or if the minimum phase $v_{min2}$ is zero or more (No in step 91110), the second three-phase common voltage is set as $v_{ofst2}=0$ (step 91112). As a result, the minimum phase $v_{min2}$ is controlled to be zero or positive.

After the processing of steps 91107, 91108, and 91111 to 91113 is completed, the second common voltage superimposer 904D superimposes the second three-phase common voltage $v_{ofst2}$ on the second phase voltage commands $v_{ssu2}^*$, $v_{ssv2}^*$, and $v_{ssw2}^*$ to generate the third phase voltage commands $v_{ssu3}^*$, $v_{ssv3}^*$, and $v_{ssw3}^*$ (step 91123).

Moreover, the second common voltage superimposer 904D determines whether or not the modulation factor "m" is 0.86 or more and 0.97 or less (step 91103). If this condition is not satisfied (No in step 91103), the second three-phase common voltage is set as $v_{ofst2}=0$ (step 91104). On the other hand, if the condition in step 91103 is satisfied (Yes in step 91103), the second common voltage superimposer 904D determines whether the common mode voltage $v_{smcm}^*$ is positive (step 91114), or whether it is negative or zero (step 91118). If the common mode voltage $v_{smcm}^*$ is zero (No in step 91114 and No in step 91118), the second common voltage superimposer 904D sets the second three-phase common voltage as $v_{ofst2}=0$ (step 91122).

If the common mode voltage $v_{smcm}^*$ of the three-phase pulse voltage commands $v_{smu}^*$, $v_{smv}^*$, and $v_{smw}^*$ is positive (Yes in step 91114), it is determined whether or not the middle phase $v_{mid2}$ exceeds zero (step 91115). If the middle phase $v_{mid2}$ exceeds zero (Yes in step 91115), the second three-phase common voltage is set as $v_{ofst2}=-v_{mid2}$ (step 91116), or if the middle phase $v_{mid2}$ does not exceed zero (No in step 91115), the second three-phase common voltage is set as $v_{ofst2}=0$ (step 91117). As a result, the middle phase $v_{mid2}$ is controlled to be zero or positive.

If the common mode voltage $v_{smcm}^*$ of the three-phase pulse voltage commands $v_{smu}^*$, $v_{smv}^*$, and $v_{smw}^*$ is negative (Yes in step 91118), it is determined whether or not the middle phase $v_{mid2}$ is less than zero (step 91119) . If the middle phase $v_{mid2}$ is less than zero (Yes in step 91119), the second three-phase common voltage is set as $v_{ofst2}=-v_{mid2}$ (step 91120), or if the middle phase $v_{mid2}$ is zero or more (No in step 91119), the second three-phase common voltage is set as $v_{ofst2}$=0 (step 91121). As a result, the middle phase $v_{mid2}$ is controlled to be zero or negative.

Finally, the second common voltage superimposer 904D superimposes the second three-phase common voltage $v_{ofst2}$ on the second phase voltage commands $v_{ssu2}^*$, $v_{ssv2}^*$, and $v_{ssw2}^*$ to generate the third phase voltage commands $v_{ssu3}^*$, $v_{ssv3}^*$, and $v_{ssw3}^*$ (step 91123).

Next, main points of the operation of the power converter 14 according to the fourth embodiment will be described. Note that the modulation factor "m" is m=0.95.

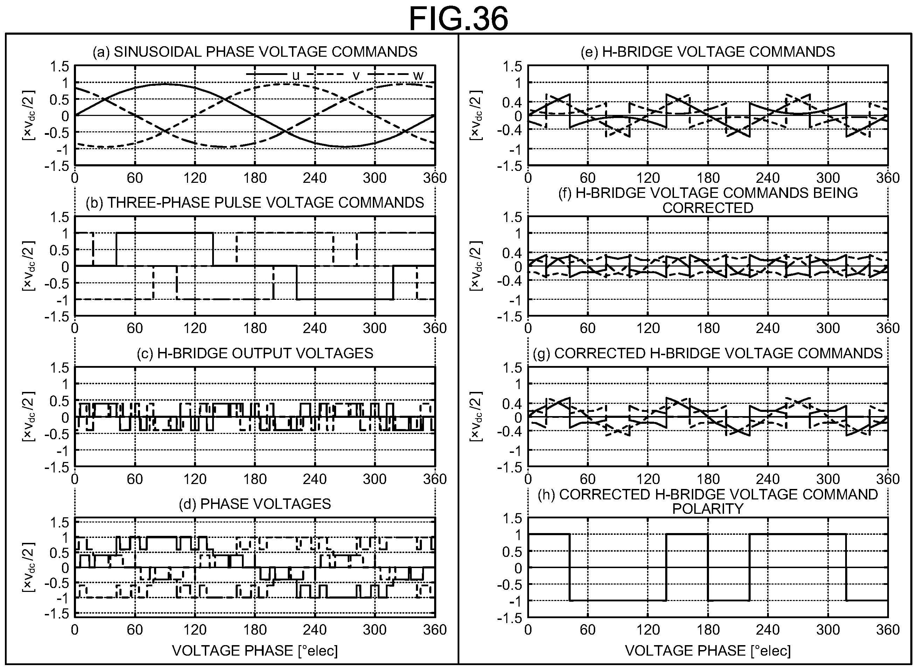

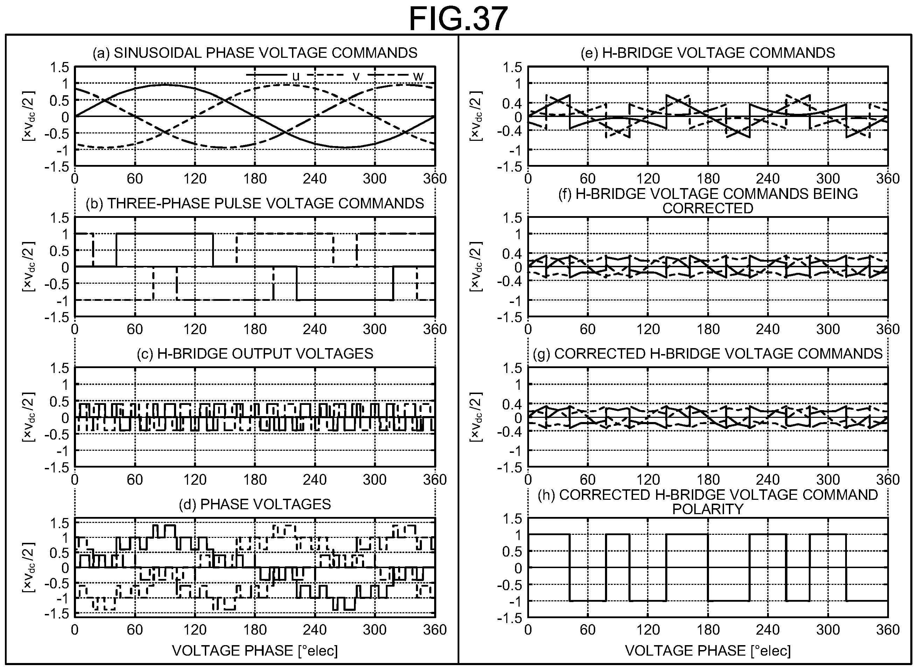

FIG. 36 is a diagram illustrating, as a target for comparison, the operation waveforms of the configuration of FIG. 24 in the third embodiment. FIG. 37 is a diagram illustrating operation waveforms of the configuration of FIG. 34 in the fourth embodiment.

Referring to the waveform of the "corrected H-bridge voltage command polarity" in FIG. 36 that is the operation waveform of the third embodiment, the number of changes in polarity of the "corrected H-bridge voltage commands" is six times and is sufficiently reduced. However, the peak values of the "corrected H-bridge voltage commands" are considerably higher than those of the "H-bridge voltage commands being corrected". That is, the "corrected H-bridge voltage commands" contain an overmodulation component exceeding the maximum value and the minimum value that can be outputted by the "H-bridge voltage commands". As a result, distortion occurs in the "phase voltages" outputted by the power converter 12.

On the other hand, referring to FIG. 37 that shows the operation waveforms of the fourth embodiment, it can be seen that the peak values of the "corrected H-bridge voltage commands" are lower than those in FIG. 36. FIG. 37 illustrates the operation waveforms with the modulation factor being m=0.95, the waveforms being subjected to processing in steps 91114 to 91123 in the flowchart of FIG. 35. Accordingly, when the common mode voltage of the "three-phase pulse voltage commands" is positive, the second three-phase common voltage $v_{ofst2}$ is calculated so that the middle value for three phases of the "H-bridge voltage commands being corrected" is zero or negative. Otherwise, when the common mode voltage of the "three-phase pulse voltage commands" is negative, the second three-phase common voltage $v_{ofst2}$ is calculated so that the middle value for three phases of the "H-bridge voltage commands being corrected" is zero or positive. As a result, the positive/negative polarity of the "corrected H-bridge voltage commands" is not switched during the period in which the three-phase sum of the "three-phase pulse voltage commands" is not zero.

Here, in the fourth embodiment, the "corrected H-bridge voltage commands" allow a change in positive/negative polarity from that of the "H-bridge voltage commands" before the correction. As a result, the number of changes in polarity of the "corrected H-bridge voltage commands" is ten times in the fundamental wave period of the "sinusoidal phase voltage commands". Although this is an increase from six times in FIG. 36 that is the result of the third embodiment, ten times is the same as a case where the power converter 14 is operated with the modulation factor of 1.15 that is a condition in about the rated voltage. Meanwhile, in the result of the third embodiment, the "corrected H-bridge voltage commands" contain the overmodulation component exceeding the maximum value $v_{cs}$ (=0.40×$v_{dc}$/2) and the minimum value -$v_{cs}$ that can be outputted, but the fourth embodiment successfully removes this overmodulation component. As a result, the fourth embodiment can obtain the output voltage with less distortion as compared with the third embodiment. Therefore, the fourth embodiment can obtain the output voltage with smaller distortion by fully exploiting the allowable number of switching operations determined by a rated operation or the like.

As described above, in the power converter according to the fourth embodiment, in the case where the modulation factor is 0.86 or more and 0.97 or less, the power conversion controller calculates the second three-phase common voltage so that the middle value for three phases of the second phase voltage commands is zero or negative when the three-phase sum of the three-phase pulse voltage commands is positive. On the other hand, the power conversion controller calculates the second three-phase common voltage so that the middle value for three phases of the second phase voltage commands is zero or positive when the three-phase sum of the three-phase pulse voltage commands is negative. This enables control that fully exploits the allowable number of switching operations, so that noise and harmonics can be reduced while reducing the switching loss of the single-phase bridge circuit. As a result, an unprecedented and remarkable effect is exerted in which a voltage with smaller distortion can be applied to the load.

The following lays out conditions of the modulation factor "m" when the second three-phase common voltage is superimposed in the second common voltage superimposer of the first to fourth embodiments.

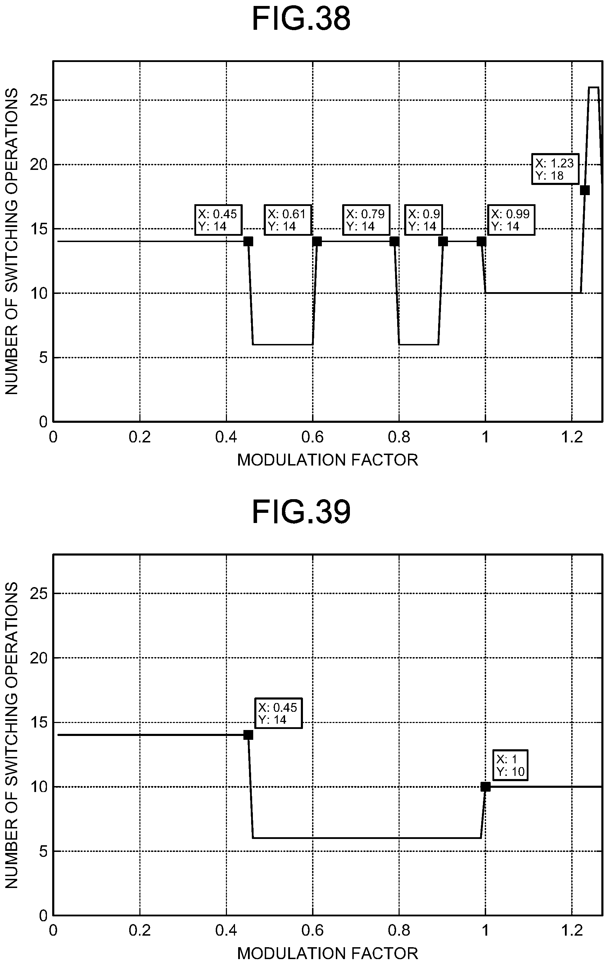

FIG. 38 is a graph illustrating a relationship between the number of switching operations of the first leg and the modulation factor in a case where the second common voltage superimposers 904A and 904B are not used in the first and second embodiments. The horizontal axis "X" represents the modulation factor, and the vertical axis "Y" represents the number of switching operations. The graph also indicates values on the X axis (the modulation factor) and values on the Y axis (the number of switching operations) at plotted points.

As described above, in a general inverter circuit, the number of switching operations with the modulation factor of m=1.15 that is a condition in the rated voltage is ten times. In contrast to this, as illustrated in FIG. 38, the number of switching operations is more than ten times in cases where the modulation factor "m" is 0.45 or less, where it is 0.61 or more and 0.79 or less, where it is 0.90 or more and 0.99 or less, and where it is 1.23 or more. In the case where the modulation factor "m" is as small as 0.45 or less, no special processing is performed in each embodiment for the reason described at the beginning of the second embodiment. Therefore, the conditions of the modulation factor "m" for superimposing the second three-phase common voltage $v_{ofst2}$ are: 0.61 or more and 0.79 or less; 0.90 or more and 0.99 or less; and 1.23 or more.

FIG. 39 is a graph illustrating a relationship between the number of switching operations and the modulation factor in a case where the second three-phase common voltage superimposer 904A is used in the first embodiment. According to FIG. 39, it can be seen that the number of switching operations is successfully reduced in a range of the modulation factor in which the number of switching operations has been larger.

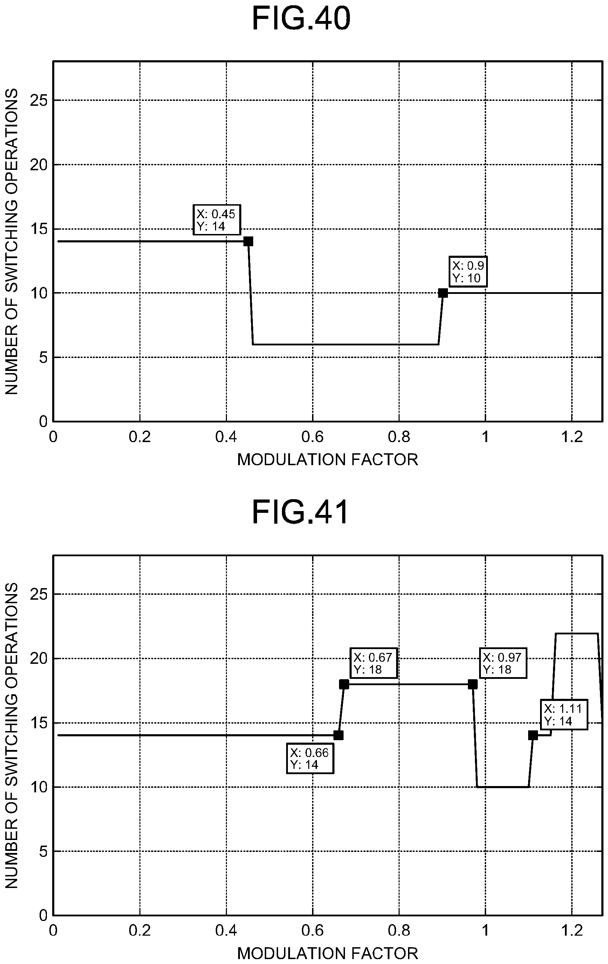

FIG. 40 is a graph illustrating a relationship between the number of switching operations and the modulation factor in a case where the second three-phase common voltage superimposer 904B is used in the second embodiment. As compared with FIG. 39, the number of switching operations is increased in the range where the modulation factor is 0.90 or more and 0.99 or less. As described in the second embodiment, this characteristic is due to the control for obtaining the output voltage with smaller distortion by fully exploiting the allowable number of switching operations. That is, in the range where the modulation factor is 0.90 or more and 0.99 or less, the allowable number of switching operations can be fully exploited.

FIG. 41 is a graph illustrating a relationship between the number of switching operations of the first leg and the modulation factor in a case where the first common voltage superimposer 903B in the third and fourth embodiments is used and the second common voltage superimposers 904C and 904D are not used. In cases where the modulation factor "m" is 0.66 or less, where it is 0.67 or more and 0.97 or less, and where it is 1.11 or more, the number of switching operations is larger than ten times which is a condition in the rated voltage in a general inverter circuit. In the case where the modulation factor "m" is as small as 0.66 or less, no special processing is performed in each embodiment for the reason described at the beginning of the second embodiment. Therefore, the conditions of the modulation factor for superimposing the second three-phase common voltage are: 0.67 or more and 0.97 or less; and 1.11 or more.

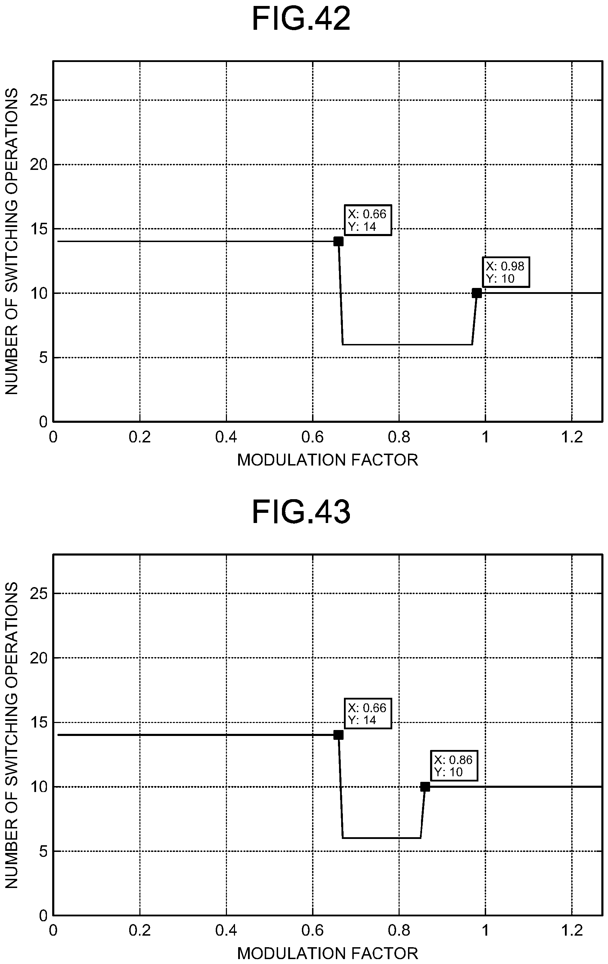

FIG. 42 is a graph illustrating a relationship between the number of switching operations and the modulation factor in a case where the second three-phase common voltage superimposer 904C is used in the third embodiment. According to FIG. 42, the number of switching operations can be reduced in a range of the modulation factor in which the number of switching operations has been larger.

FIG. 43 is a graph illustrating a relationship between the number of switching operations and the modulation factor in a case where the second three-phase common voltage superimposer 904D is used in the fourth embodiment. According to FIG. 43, in the range where the modulation factor is 0.86 or more and 0.97 or less, the allowable number of switching operations can be fully exploited.

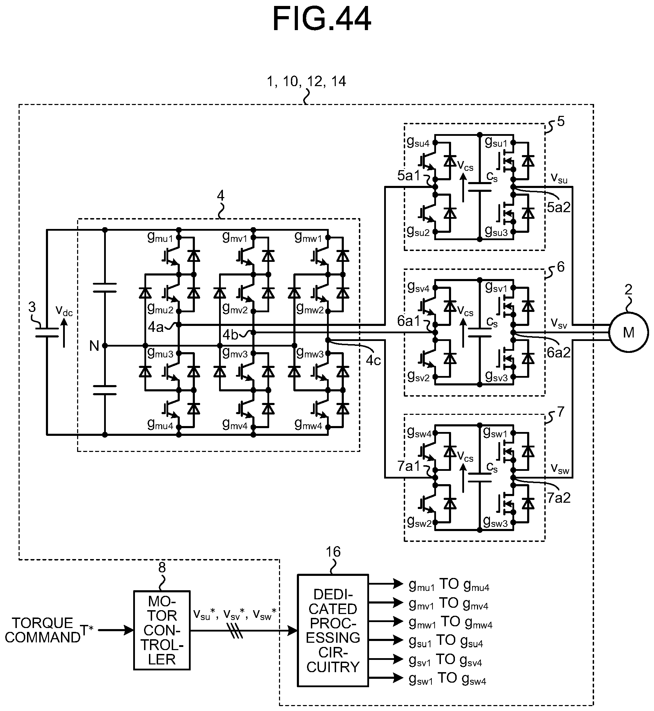

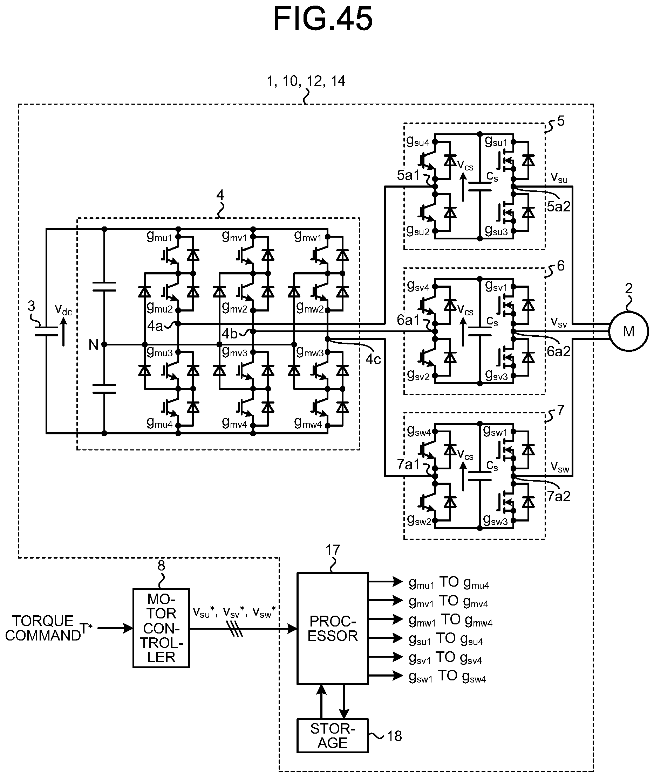

Next, a hardware configuration of the power converter according to the first to fourth embodiments described above will be described with reference to FIGS. 44 and 45. FIG. 44 is a diagram illustrating an example of the hardware configuration that implements the functions of the power conversion controller according to the first to fourth embodiments. FIG. 45 is a diagram illustrating another example of the hardware configuration that implements the functions of the power conversion controller according to the first to fourth embodiments. Note that the functions of the power conversion controller refer to the functions of the three-phase pulse voltage command calculator 901, the dead time inserters 902 and 907, the first common voltage superimposers 903A and 903B, the second common voltage superimposers 904A, 904B, 904C, and 904D, the voltage polarity controller 905, the PWM controller 906, and the subtractor 908, which are included in the power conversion controllers 9A, 11B, 13C, and 15D.

The functions of the power conversion controller can be implemented using a processing circuitry. In FIG. 44, the power conversion controllers 9A, 11B, 13C, and 15D in the configurations of the first to fourth embodiments are replaced with a dedicated processing circuitry 16. In a case where dedicated hardware is used, the dedicated processing circuitry 16 corresponds to a single circuit, a composite circuit, a programmed processor, a parallel-programmed processor, an application specific integrated circuit (ASIC), a field programmable gate array (FPGA), or a combination thereof. The functions of the power conversion controller may be implemented individually by their respective processing circuitries or collectively by a processing circuitry.

In FIG. 45, the power conversion controllers 9A, 11B, 13C, and 15D in the configurations of the first to fourth embodiments are replaced with a processor 17 and a storage device 18. The processor 17 may be an arithmetic means such as an arithmetic device, a microprocessor, a microcomputer, a central processing unit (CPU), or a digital signal processor (DSP). The storage device 18 can be exemplified by a non-volatile or volatile semiconductor memory such as a random access memory (RAM), a read only memory (ROM), a flash memory, an erasable programmable ROM (EPROM), or an electrically EPROM (EEPROM (registered trademark)) .

In the case where the processor 17 and the storage device 18 are used, the functions of the power conversion controller are implemented by software, firmware, or a combination thereof. The software or firmware is described as a program and stored in the storage device 18. The processor 17 reads and executes the programs stored in the storage device 18. It can also be said that these programs cause a computer to execute procedure and method in the functions of the power conversion controller.

One or some of the functions of the power conversion controller may be implemented by hardware and the some other thereof may be implemented by software or firmware. For example, the functions of the dead time inserters 902 and 907 and the PWM controller 906 may be implemented using dedicated hardware, and the functions of the three-phase pulse voltage command calculator 901, the first common voltage superimposers 903A and 903B, the second common voltage superimposers 904A, 904B, 904C, and 904D, the voltage polarity controller 905, and the subtractor 908 may be implemented using the processor 17 and the storage device 18.

Note that the present description has been given by way of example, in which the load is the motor and the motor is subjected to torque control in terms of the operation waveforms and the like, but the present disclosure is not limited to this example. The motor may be subjected to speed control. Also, the load may be something other than the motor. Moreover, as an example of connection to the load, the power converter may be connected to a system power supply or another power converter, so as to be used for controlling active electric power and reactive electric power. In addition, although the direct current power supply has been described using the symbol of a voltage source, a battery may be used therefor, or a voltage rectified using a transformer and a semiconductor element, which is originated from an electric power system may be used therefor. Furthermore, although the three-phase three-level inverter exemplified as the inverter circuit is of a diode clamp type as an example, the three-phase three-level inverter may be of a capacitor clamp type, or another type in which a bidirectional switch is used between an output terminal and a direct current neutral point for each phase.

The semiconductor switching element used in the three-phase inverter circuit and the single-phase bridge circuit has been described using the symbol of IGBT or MOSFET, but any element can be used as long as the semiconductor element can be turned on and off. In addition, as the wide bandgap semiconductor element, not only an element using SiC but also an element using GaN can be used, and the direct current voltage and the element withstand voltage can be freely set without being limited to the values used in the embodiments. Furthermore, the present description has been given for use of the element made of Si for the three-phase inverter circuit and the element made of SiC for the H-bridge circuit, but the former element and the latter element can be interchanged in usage between these circuits for different application. Using the element made of SiC on the high voltage side as just described can construct the power converter having a higher direct current voltage. Although the description has been based on the assumption that the voltage waveform of the three-phase inverter circuit is on one pulse voltage, the voltage waveform is not limited to the number of pulses in the examples. In other respects, a voltage of a plurality of numbers of pulses may be generated by PWM control in which the voltage command and the carrier are compared to each other, or a pulse pattern in which the phase angle $\alpha$ is optimized to minimize the loss of the inverter or the load may be used.

The configurations illustrated in the above embodiments illustrate examples, each of which can be combined with other publicly known techniques, and the embodiments can be combined together. The illustrated configuration can be partially omitted and/or modified without departing from the scope of the present disclosure.

Reference Signs List

1, 10, 12, 14 power converter; 2 motor; 3 direct current power supply; 4 inverter circuit; 4a, 4b, 4c alternating current end; 5, 6, 7 H-bridge circuit; 5a1, 5a2, 6a1, 6a2, 7a1, 7a2 midpoint; 8 motor controller; 9A, 11B, 13C, 15D power conversion controller; 16 dedicated processing circuitry; 17 processor; 18 storage device; 901 three-phase pulse voltage command calculator; 902, 907 dead time inserter; 903A, 903B first common voltage superimposer; 904A, 904B, 904C, 904D second common voltage superimposer; 905 voltage polarity controller; 906 PWM controller; 908 subtractor.

**Claims**

1. A power converter that converts direct current power outputted from a direct current power supply into alternating current power to a load, and supplies the alternating current power to the load, the power converter comprising:

   a three-phase inverter circuit connected to positive and negative terminals of the direct current power supply;
   three single-phase bridge circuits each including: a first leg in which two semiconductor switching elements are connected in series, and a midpoint that is a connecting end of the two semiconductor switching elements is connected to an alternating current end of a corresponding phase among different alternating current ends of the three-phase inverter circuit; a second leg connected in parallel to the first leg, in which two semiconductor switching elements are connected in series, and a midpoint that is a connecting end of the two semiconductor switching elements is connected to a terminal of a corresponding phase among different terminals of the load; and a capacitor connected to both ends of each of the first and second legs; and
   a controller to generate first gate signals for controlling an operation of the three-phase inverter circuit on the basis of sinusoidal phase voltage commands and second gate signals for controlling operations of the first and second legs in the three single-phase bridge circuits, wherein

the controller

divides the sinusoidal phase voltage commands into three-phase pulse voltage commands to be issued to the three-phase inverter circuit and first phase voltage commands that are voltage commands to be issued to the three single-phase bridge circuits, respectively;

generates the first gate signals on the basis of the three-phase pulse voltage commands;

calculates a first three-phase common voltage common to three phases, and generates second phase voltage commands obtained by superimposing the first three-phase common voltage calculated on the first phase voltage commands;

further calculates a second three-phase common voltage common to the three phases, and generates third phase voltage commands obtained by superimposing the second three-phase common voltage calculated on the second phase voltage commands;

generates the second gate signals to be applied to one of the first and second legs on the basis of positive/negative polarity of the third phase voltage commands, and concurrently generates the second gate signals to be applied to another one of the first and second legs in accordance with the third phase voltage commands; and

calculates the second three-phase common voltage so that the positive/negative polarity of the third phase voltage commands is not switched during a period in which a three-phase sum of the three-phase pulse voltage commands is not zero.

2. The power converter according to claim 1, wherein

the controller calculates the second three-phase common voltage so that the positive/negative polarity of the third phase voltage commands does not change from that of the first phase voltage commands.

3. The power converter according to claim 1 or 2, wherein

a capacitor voltage that is a voltage across the capacitor is a quarter or less of a voltage of the direct current power supply.

4. The power converter according to claim 3, wherein

the controller calculates the first three-phase common voltage so that an absolute value of a voltage value for each phase of the second phase voltage commands does not exceed the capacitor voltage.

5. The power converter according to any one of claims 1 to 4, wherein

when a modulation factor is defined as a value obtained by dividing an amplitude of the sinusoidal phase voltage command by a half of the voltage of the direct current power supply,

in a case where the modulation factor is 0.61 or more and 0.79 or less, where the modulation factor is 0.90 or more and 0.99 or less, or where the modulation factor is 1.23 or more,

the controller

calculates the second three-phase common voltage so that a maximum value of the second phase voltage commands is zero or negative when a three-phase sum of the three-phase pulse voltage commands is positive; and

calculates the second three-phase common voltage so that a minimum value of the second phase voltage commands is zero or positive when the three-phase sum of the three-phase pulse voltage commands is negative.

6. The power converter according to claim 1, 3, 4, or 5, wherein

when the modulation factor is defined as a value obtained by dividing an amplitude of the sinusoidal phase voltage command by a half of the voltage of the direct current power supply,

in a case where the modulation factor is 0.90 or more and 0.99 or less,

the controller

calculates the second three-phase common voltage so that the maximum value of the second phase voltage commands is zero or positive when the three-phase sum of the three-phase pulse voltage commands is positive; and

calculates the second three-phase common voltage so that the minimum value of the second phase voltage commands is zero or negative when the three-phase sum of the three-phase pulse voltage commands is negative.

7. The power converter according to claim 1 or 2, wherein

the controller generates, as the first three-phase common voltage, a value obtained by inverting polarity of an average value of a maximum value and a minimum value of the first phase voltage commands.

8. The power converter according to claim 1, 2, or 7, wherein

when a modulation factor is defined as a value obtained by dividing an amplitude of the sinusoidal phase voltage command by a half of the voltage of the direct current power supply,
in a case where the modulation factor is 0.67 or more and 0.97 or less, or where the modulation factor is 1.11 or more,
the controller
calculates the second three-phase common voltage so that a maximum value of the second phase voltage commands is zero or negative when a three-phase sum of the three-phase pulse voltage commands is positive; and
calculates the second three-phase common voltage so that a minimum value of the second phase voltage commands is zero or positive when the three-phase sum of the three-phase pulse voltage commands is negative.

9. The power converter according to claim 1, 7, or 8, wherein

when the modulation factor is defined as a value obtained by dividing an amplitude of the sinusoidal phase voltage command by a half of the voltage of the direct current power supply,
in a case where the modulation factor is 0.86 or more and 0.97 or less,
the controller
calculates the second three-phase common voltage so that a middle value of the second phase voltage commands is zero or negative when the three-phase sum of the three-phase pulse voltage commands is positive; and
calculates the second three-phase common voltage so that the middle value of the second phase voltage commands is zero or positive when the three-phase sum of the three-phase pulse voltage commands is negative.

10. The power converter according to any one of claims 1 to 9, wherein

the three-phase inverter circuit is configured to use a semiconductor switching element formed of a narrow bandgap semiconductor, and
the single-phase bridge circuit is configured to use a semiconductor switching element formed of a wide bandgap semiconductor.

11. The power converter according to any one of claims 1 to 10, wherein
of the first and second legs constituting the single-phase bridge circuit, the leg to be controlled by the second gate signal generated on the basis of the positive/negative polarity of the third phase voltage command is configured to use a semiconductor switching element formed of a narrow bandgap semiconductor.

12. The power converter according to any one of claims 1 to 11, wherein
the number of times the positive/negative polarity is switched by the third phase voltage commands is ten times or less in a fundamental wave period of the sinusoidal phase voltage commands.

# FIG.1

# FIG.2

9A

$v_{su}{}^*, v_{sv}{}^*, v_{sw}{}^*$

THREE-PHASE PULSE VOLTAGE COMMAND CALCULATOR — 901

$g_{mu1}'$ TO $g_{mu4}'$
$g_{mv1}'$ TO $g_{mv4}'$
$g_{mw1}'$ TO $g_{mw4}'$

DEAD TIME INSERTER — 902

$g_{mu1}$ TO $g_{mu4}$
$g_{mv1}$ TO $g_{mv4}$
$g_{mw1}$ TO $g_{mw4}$

$v_{smu}{}^*, v_{smv}{}^*, v_{smw}{}^*$

908

$v_{ssu1}{}^*, v_{ssv1}{}^*, v_{ssw1}{}^*$

FIRST COMMON VOLTAGE SUPERIMPOSER — 903A

$v_{ssu2}{}^*, v_{ssv2}{}^*, v_{ssw2}{}^*$

SECOND COMMON VOLTAGE SUPERIMPOSER — 904A

$v_{ssu3}{}^*, v_{ssv3}{}^*, v_{ssw3}{}^*$

$v_{cs}$

VOLTAGE POLARITY CONTROLLER — 905

$g_{su2}', g_{su4}'$
$g_{sv2}', g_{sv4}'$
$g_{sw2}', g_{sw4}'$

$v_{ssu4}{}^*, v_{ssv4}{}^*, v_{ssw4}{}^*$

PWM CONTROLLER — 906

$g_{su1}', g_{su3}'$
$g_{sv1}', g_{sv3}'$
$g_{sw1}', g_{sw3}'$

DEAD TIME INSERTER — 907

$g_{su1}$ TO $g_{su4}$
$g_{sv1}$ TO $g_{sv4}$
$g_{sw1}$ TO $g_{sw4}$

EP 4 220 931 A1

# FIG.3

# FIG.4

START

90301

REARRANGE $v_{ssu1}^*$, $v_{ssv1}^*$, AND $v_{ssw1}^*$ INTO MAXIMUM PHASE $v_{max1}$ AND MINIMUM PHASE $v_{min1}$, AND CALCULATE $v_{smcm}^* = (v_{smu}^* + v_{smv}^* + v_{smw}^*)/3$

90302
$v_{smcm}^* > 0$ ? — NO

YES

90305
$v_{min1} < -v_{cs}$ ? — NO

90306 YES

$v_{ofst1} = -v_{cs} - v_{min1}$

90307

$v_{ofst1} = 0$

90303
$v_{smcm}^* < 0$ ? — NO

YES

90308
$v_{max1} > v_{cs}$ ? — NO

90309 YES

$v_{ofst1} = v_{cs} - v_{max1}$

90310

$v_{ofst1} = 0$

90304

$v_{ofst1} = 0$

90311

$v_{ssu2}^* = v_{ssu1}^* + v_{ofst1}$, $v_{ssv2}^* = v_{ssv1}^* + v_{ofst1}$, $v_{ssw2}^* = v_{ssw1}^* + v_{ofst1}$

END

# FIG.5

START

↓ 90401

REARRANGE $v_{ssu2}{}^*$, $v_{ssv2}{}^*$, AND $v_{ssw2}{}^*$ INTO MAXIMUM PHASE $v_{max2}$ AND MINIMUM PHASE $v_{min2}$, AND CALCULATE $v_{smcm}{}^* = (v_{smu}{}^* + v_{smv}{}^* + v_{smw}{}^*)/3$

↓ 90402

(m≥0.61 and m≤0.79) or (m≥0.90 and m≤0.99) or m≥1.23 ? —— NO

YES ↓

90404  $v_{smcm}{}^* > 0$ ? —— NO

90408  $v_{smcm}{}^* < 0$ ? —— NO

YES ↓ 90405  $v_{max2} > 0$ ? —— NO

YES ↓ 90409  $v_{min2} < 0$ ? —— NO

90406 ↓ Yes
$v_{ofst2} = -v_{max2}$

90407
$v_{ofst2} = 0$

90410 ↓ YES
$v_{ofst2} = -v_{min2}$

90411
$v_{ofst2} = 0$

90412
$v_{ofst2} = 0$

90403
$v_{ofst2} = 0$

↓ 90413

$v_{ssu3}{}^* = v_{ssu2}{}^* + v_{ofst2}$, $v_{ssv3}{}^* = v_{ssv2}{}^* + v_{ofst2}$, $v_{ssw3}{}^* = v_{ssw2}{}^* + v_{ofst2}$

↓

END

# FIG.6

$v_{cs}$

c

$v_{ss3}{}^* = v_{ss4}{}^*$

0

$-v_{cs}$

$g_{s1}{}'$
H
L

$g_{s3}{}'$
H
L

$g_{s2}{}'$
H
L

$g_{s4}{}'$
H
L

$v_{ssi}{}^*$
$v_{cs}$
0

$-v_{cs}$

→ time

# FIG.7

# FIG.8

# FIG.9

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.10

### (a) SINUSOIDAL PHASE VOLTAGE COMMANDS

— u   - - - v   — - — w

### (b) THREE-PHASE PULSE VOLTAGE COMMANDS

### (c) H-BRIDGE OUTPUT VOLTAGES

### (d) PHASE VOLTAGES

VOLTAGE PHASE [°elec]

### (e) H-BRIDGE VOLTAGE COMMANDS

### (f) H-BRIDGE VOLTAGE COMMANDS BEING CORRECTED

### (g) CORRECTED H-BRIDGE VOLTAGE COMMANDS

### (h) CORRECTED H-BRIDGE VOLTAGE COMMAND POLARITY

VOLTAGE PHASE [°elec]

EP 4 220 931 A1

# FIG.11

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.12

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.13

**(a) SINUSOIDAL PHASE VOLTAGE COMMANDS**

[×v_dc/2]

legend: —— u  – – – v  — — w

**(b) THREE-PHASE PULSE VOLTAGE COMMANDS**

[×v_dc/2]

**(c) H-BRIDGE OUTPUT VOLTAGES**

[×v_dc/2]

**(d) PHASE VOLTAGES**

[×v_dc/2]

VOLTAGE PHASE [°elec]

**(e) H-BRIDGE VOLTAGE COMMANDS**

[×v_dc/2]

**(f) H-BRIDGE VOLTAGE COMMANDS BEING CORRECTED**

[×v_dc/2]

**(g) CORRECTED H-BRIDGE VOLTAGE COMMANDS**

[×v_dc/2]

**(h) CORRECTED H-BRIDGE VOLTAGE COMMAND POLARITY**

VOLTAGE PHASE [°elec]

EP 4 220 931 A1

# FIG.14

### (a) SINUSOIDAL PHASE VOLTAGE COMMANDS

Legend: —— u, - - - - v, —·— w

[×$v_{dc}$/2]

### (b) THREE-PHASE PULSE VOLTAGE COMMANDS

[×$v_{dc}$/2]

### (c) H-BRIDGE OUTPUT VOLTAGES

[×$v_{dc}$/2]

### (d) PHASE VOLTAGES

[×$v_{dc}$/2]

VOLTAGE PHASE [°elec]

### (e) H-BRIDGE VOLTAGE COMMANDS

[×$v_{dc}$/2]

### (f) H-BRIDGE VOLTAGE COMMANDS BEING CORRECTED

[×$v_{dc}$/2]

### (g) CORRECTED H-BRIDGE VOLTAGE COMMANDS

[×$v_{dc}$/2]

### (h) CORRECTED H-BRIDGE VOLTAGE COMMAND POLARITY

VOLTAGE PHASE [°elec]

EP 4 220 931 A1

# FIG.15

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.16

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.17

## (a) SINUSOIDAL PHASE VOLTAGE COMMANDS

## (b) THREE-PHASE PULSE VOLTAGE COMMANDS

## (c) H-BRIDGE OUTPUT VOLTAGES

## (d) PHASE VOLTAGES

VOLTAGE PHASE [°elec]

## (e) H-BRIDGE VOLTAGE COMMANDS

## (f) H-BRIDGE VOLTAGE COMMANDS BEING CORRECTED

## (g) CORRECTED H-BRIDGE VOLTAGE COMMANDS

## (h) CORRECTED H-BRIDGE VOLTAGE COMMAND POLARITY

VOLTAGE PHASE [°elec]

EP 4 220 931 A1

# FIG.18

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.19

# FIG.20

# FIG.21

START

90801
REARRANGE $v_{ssu2}^*$, $v_{ssv2}^*$, AND $v_{ssw2}^*$ INTO MAXIMUM PHASE $v_{max2}$ AND MINIMUM PHASE $v_{min2}$, AND CALCULATE $v_{smcm}^* = (v_{smu}^* + v_{smv}^* + v_{smw}^*)/3$

90802
(m≥0.61 and m≤0.79) or m≥1.23 ?　　NO

YES

90805
$v_{smcm}^* > 0$ ?　　NO

Yes

90806
$v_{max2} > 0$ ?　　NO

90807　YES
$v_{ofst2} = -v_{max2}$

90808
$v_{ofst2} = 0$

90809
$v_{smcm}^* < 0$ ?　　NO

YES

90810
$v_{min2} < 0$ ?　　NO

90811　YES
$v_{ofst2} = -v_{min2}$

90812
$v_{ofst2} = 0$

90813
$v_{ofst2} = 0$

90823
$v_{ssu3}^* = v_{ssu2}^* + v_{ofst2}$, $v_{ssv3}^* = v_{ssv2}^* + v_{ofst2}$, $v_{ssw3}^* = v_{ssw2}^* + v_{ofst2}$

END

90803
m≥0.90 and m≤0.99 ?　　NO

YES

90814
$v_{smcm}^* > 0$ ?　　NO

YES

90815
$v_{max2} < 0$ ?　　NO

90816　YES
$v_{ofst2} = -v_{max2}$

90817
$v_{ofst2} = 0$

90818
$v_{smcm}^* < 0$ ?　　NO

YES

90819
$v_{min2} > 0$ ?　　NO

90820　YES
$v_{ofst2} = -v_{min2}$

90821
$v_{ofst2} = 0$

90822
$v_{ofst2} = 0$

90804
$v_{ofst2} = 0$

90823
$v_{ssu3}^* = v_{ssu2}^* + v_{ofst2}$, $v_{ssv3}^* = v_{ssv2}^* + v_{ofst2}$, $v_{ssw3}^* = v_{ssw2}^* + v_{ofst2}$

END

FIG.22

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.23

# FIG.24

EP 4 220 931 A1

# FIG.25

START

REARRANGE $v_{ssu1}{}^*$, $v_{ssv1}{}^*$, AND $v_{ssw1}{}^*$ INTO MAXIMUM PHASE $v_{max1}$ AND MINIMUM PHASE $v_{min1}$ — 90901

$v_{ofst1} = -0.5^x (v_{max1} + v_{min1})$ — 90902

$v_{ssu2}{}^* = v_{ssu1}{}^* + v_{ofst1}$, $v_{ssv2}{}^* = v_{ssv1}{}^* + v_{ofst1}$, $v_{ssw2}{}^* = v_{ssw1}{}^* + v_{ofst1}$ — 90903

END

# FIG.26

START

91001
REARRANGE $v_{ssu2}^*$, $v_{ssv2}^*$, AND $v_{ssw2}^*$ INTO MAXIMUM PHASE $v_{max2}$ AND MINIMUM PHASE $v_{min2}$, AND CALCULATE $v_{smcm}^* = (v_{smu}^* + v_{smv}^* + v_{smw}^*)/3$

91002
($m \geq 0.67$ and $m \leq 0.97$) or $m \geq 1.11$ ?

NO

YES

91004
$v_{smcm}^* > 0$ ?

NO

91008
$v_{smcm}^* < 0$ ?

NO

YES

YES

91005
$v_{max2} > 0$ ?

NO

91009
$v_{min2} < 0$ ?

NO

91006 YES
$v_{ofst2} = -v_{max2}$

91007
$v_{ofst2} = 0$

91010 YES
$v_{ofst2} = -v_{min2}$

91011
$v_{ofst2} = 0$

91012
$v_{ofst2} = 0$

91003
$v_{ofst2} = 0$

91013
$v_{ssu3}^* = v_{ssu2}^* + v_{ofst2}$, $v_{ssv3}^* = v_{ssv2}^* + v_{ofst2}$, $v_{ssw3}^* = v_{ssw2}^* + v_{ofst2}$

END

# FIG.27

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.28

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.29

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

# FIG.30

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

VOLTAGE PHASE [°elec]

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

FIG.31

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

# FIG.32

**(a) SINUSOIDAL PHASE VOLTAGE COMMANDS** — U, V, W

**(b) THREE-PHASE PULSE VOLTAGE COMMANDS**

**(c) H-BRIDGE OUTPUT VOLTAGES**

**(d) PHASE VOLTAGES**

VOLTAGE PHASE [°elec]

**(e) H-BRIDGE VOLTAGE COMMANDS**

**(f) H-BRIDGE VOLTAGE COMMANDS BEING CORRECTED**

**(g) CORRECTED H-BRIDGE VOLTAGE COMMANDS**

**(h) CORRECTED H-BRIDGE VOLTAGE COMMAND POLARITY**

VOLTAGE PHASE [°elec]

EP 4 220 931 A1

# FIG.33

# FIG.34

EP 4 220 931 A1

# FIG.35

```
┌─────────────┐
│    START    │
└─────────────┘
       │
       ▼  ⌐91101
┌────────────────────────────────────────────────────────────────┐
│ REARRANGE $v_{ssu2}^*$, $v_{ssv2}^*$, AND $v_{ssw2}^*$ INTO      │
│ MAXIMUM PHASE $v_{max2}$, MIDDLE PHASE $v_{mid2}$, AND MINIMUM   │
│ PHASE $v_{min2}$, AND CALCULATE                                 │
│ $v_{smcm}^* = (v_{smu}^* + v_{smv}^* + v_{smw}^*)/3$            │
└────────────────────────────────────────────────────────────────┘
       │
       ▼  ⌐91102
   ◇ (m≥0.67 and m＜0.86) or m≥1.11 ? ◇ ──── NO ────┐
       │ YES                                        │
```

**91102:** $(m \geq 0.67$ and $m < 0.86)$ or $m \geq 1.11$ ? — NO

**91105:** $v_{smcm}^* > 0$ ? — NO
**91109:** $v_{smcm}^* < 0$ ? — NO

**91106:** $v_{max2} > 0$ ? — NO (YES)
**91110:** $v_{min2} < 0$ ? — NO (YES)

**91107:** $v_{ofst2} = -v_{max2}$
**91108:** $v_{ofst2} = 0$
**91111:** $v_{ofst2} = -v_{min2}$
**91112:** $v_{ofst2} = 0$
**91113:** $v_{ofst2} = 0$

**91123:** $v_{ssu3}^* = v_{ssu2}^* + v_{ofst2}$, $v_{ssv3}^* = v_{ssv2}^* + v_{ofst2}$, $v_{ssw3}^* = v_{ssw2}^* + v_{ofst2}$

```
┌─────────────┐
│     END     │
└─────────────┘
```

**91103:** $m \geq 0.86$ and $m \leq 0.97$ ? — NO

**91114:** $v_{smcm}^* > 0$ ? — NO
**91118:** $v_{smcm}^* < 0$ ? — NO

**91115:** $v_{mid2} > 0$ ? — NO (YES)
**91119:** $v_{mid2} < 0$ ? — NO (YES)

**91116:** $v_{ofst2} = -v_{mid2}$
**91117:** $v_{ofst2} = 0$
**91120:** $v_{ofst2} = -v_{mid2}$
**91121:** $v_{ofst2} = 0$
**91122:** $v_{ofst2} = 0$
**91104:** $v_{ofst2} = 0$

**91123:** $v_{ssu3}^* = v_{ssu2}^* + v_{ofst2}$, $v_{ssv3}^* = v_{ssv2}^* + v_{ofst2}$, $v_{ssw3}^* = v_{ssw2}^* + v_{ofst2}$

```
┌─────────────┐
│     END     │
└─────────────┘
```

# FIG.36

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.37

(a) SINUSOIDAL PHASE VOLTAGE COMMANDS

(b) THREE-PHASE PULSE VOLTAGE COMMANDS

(c) H-BRIDGE OUTPUT VOLTAGES

(d) PHASE VOLTAGES

(e) H-BRIDGE VOLTAGE COMMANDS

(f) H-BRIDGE VOLTAGE COMMANDS BEING CORRECTED

(g) CORRECTED H-BRIDGE VOLTAGE COMMANDS

(h) CORRECTED H-BRIDGE VOLTAGE COMMAND POLARITY

VOLTAGE PHASE [°elec]

EP 4 220 931 A1

# FIG.38

# FIG.39

# FIG.40

# FIG.41

# FIG.42

# FIG.43

# FIG.44

# FIG.45

**EP 4 220 931 A1**

<table>
<tr><td colspan="2" align="center">**INTERNATIONAL SEARCH REPORT**</td><td>International application No.</td></tr>
<tr><td colspan="2"></td><td>PCT/JP2020/036540</td></tr>
</table>

A.  CLASSIFICATION OF SUBJECT MATTER
H02M 7/483(2007.01)i
FI: H02M7/483

According to International Patent Classification (IPC) or to both national classification and IPC

B.  FIELDS SEARCHED

Minimum documentation searched (classification system followed by classification symbols)
H02M7/483

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 6682049 B1 (MITSUBISHI ELECTRIC CORP.) 15 April 2020 (2020-04-15) entire text, all drawings | 1–12 |
| A | JP 2000-166251 A (FUJI ELECTRIC CO., LTD.) 16 June 2000 (2000-06-16) entire text, all drawings | 1–12 |
| A | JP 2004-120979 A (MITSUBISHI ELECTRIC CORP.) 15 April 2004 (2004-04-15) entire text, all drawings | 1–12 |

☐  Further documents are listed in the continuation of Box C.    ☒  See patent family annex.

| | |
|---|---|
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 30 October 2020 (30.10.2020) | 10 November 2020 (10.11.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2020/036540

| Patent Documents referred in the Report | Publication Date | Patent Family | Publication Date |
|---|---|---|---|
| JP 6682049 B1 | 15 Apr. 2020 | (Family: none) | |
| JP 2000-166251 A | 16 Jun. 2000 | (Family: none) | |
| JP 2004-120979 A | 15 Apr. 2004 | (Family: none) | |

Form PCT/ISA/210 (patent family annex) (January 2015)

67

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010103600 A

**Non-patent literature cited in the description**

- **MASAKI YAMADA et al.** Development of a New Voltage Sag Compensator with a Gradationally Controlled Voltage Inverter. *IEEJ Trans. IA,* 2007, vol. 127-D (4), 451-456